(19) Europäisches Patentamt / European Patent Office / Office européen des brevets

(11) EP 3 438 528 A1

(12) EUROPEAN PATENT APPLICATION
published in accordance with Art. 153(4) EPC

(43) Date of publication:
06.02.2019 Bulletin 2019/06

(51) Int Cl.:
F23B 60/00 (2006.01)   F23N 5/00 (2006.01)

(21) Application number: 16896989.7

(22) Date of filing: 07.07.2016

(86) International application number:
PCT/JP2016/070196

(87) International publication number:
WO 2017/168772 (05.10.2017 Gazette 2017/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.03.2016 JP 2016069822
30.03.2016 JP 2016069823
30.03.2016 JP 2016069824

(71) Applicants:
• Miyatani, Kazuo
Yokohama-shi, Kanagawa 247-0022 (JP)
• Quantum Design Japan, Inc.
Tokyo 171-0042 (JP)

(72) Inventor: MIYATANI Kazuo
Tokyo 171-0042 (JP)

(74) Representative: Osha Liang
2, rue de la Paix
75002 Paris (FR)

(54) **SOLID FUEL COMBUSTION DEVICE, SOLID FUEL COMBUSTION METHOD, GAS HEATING DEVICE, LIQUID HEATING DEVICE, POWER GENERATION SYSTEM, AND COOLING SYSTEM**

(57)    Provided are a burning apparatus of a solid fuel and a burning method of a solid fuel with improved burning efficiency, as well as a gas heating apparatus, a liquid heating apparatus, a power generation system and a cooling system. A burning apparatus 100 of a solid fuel includes a burning furnace 20 which burns the solid fuel, a gas feeding device 40 which feeds a gas containing oxygen to the burning furnace 20, and an exhaust device 42 which exhausts a flue gas discharged from a discharge port 24 of the burning furnace 20. The burning apparatus 100 further includes a control unit 46 which simultaneously controls the gas feeding device 40 and exhaust device 44 and controls a furnace pressure of the burning furnace 20.

Fig. 1

## Description

[Technical Field]

The present invention relates to a burning apparatus of a solid fuel and a burning method of a solid fuel for burning solid fuels such as wood-based bulk combustibles (woods, carbides, or bio-based bulk combustibles) in a burning furnace, as well as to a gas heating apparatus, a liquid heating apparatus, a power generation system and a cooling system.

[Background Art]

A burning apparatus of wood-based bulk fuels has been proposed (Patent Document 1 to Patent Document 4). The term "wood-based bulk fuel" refers to various types of wood-based fuels such as logs, thinned woods, driftwoods, tree stumps, pruning materials, lumber scraps, woodworking scraps, laminated scraps, construction lumber, agricultural lumber, and civil engineering lumber, but also includes various types of artificial fuels such as firewoods, wood shavings, charcoals, coals, wooden chips, wooden pellets, straws of trees and plants, scourings, and moldings thereof, as well as numerous types of biomass-based fuels. The present invention relates to a boiler capable of burning solid fuels including the foregoing bio-based bulk combustibles and even coals in their original large shape, and these fuels are hereinafter collectively referred to as "wood-based bulk fuels".

Wood-based bulk fuels have been used as a useful energy source together with the history of mankind, and, while fuels other than fossil fuels are carbon-neutral fuels as carbon dioxide countermeasures to deal with global warming and important as zero emission-type fuels, it is difficult to prevent air pollution caused by flue gas due to the incomplete burning of solid fuels when they are burned.

Meanwhile, while the burning technologies and burning apparatuses of gas fuels, liquid fuels, and solid fuels such as coals have developed, because the use of fossil fuels such as coal, petroleum, natural gas, coal-derived city gas, and propane gas increases the concentration of carbon dioxide and ash dust in the atmosphere, their use is limited due to the ash dust caused by PM 2.5 and in terms of measures to be taken for global warming, and often involves air pollution.

As methods of burning wood-based bulk fuels, various methods such as bonfire, hearth, oven, wood-burning stove, chip boiler, pellet boiler, furnace-movable boiler, and wood waste generator have been known together with the history of mankind. With these burning methods, contamination from the flue gas becomes lowest when the burning of fuel and the supply of air are controlled in a well-balanced manner, but it has been difficult from the past to completely eliminate the contamination from the flue gas of wood-derived fuels, which are solid fuels, due to the incomplete burning thereof, and, while it may be necessary to burn the fuel system at a high temperature of 1000°C to 1100°C to completely eliminate the contamination, it cannot be said that these are sufficient conditions.

With the method of using bulk firewoods, there are inconveniences in that firewood fuel needs to be continuously supplied in accordance with the burning state, and manpower is constantly required for managing the burning process according to the method of stacking and burning the firewoods. With a large-size wood-burning steam engine or a wood-burning stove, the fuel needs to be cut to a size of at least roughly 5 to 20 cm and continuously supplied by way of personal or mechanical means. Moreover, because the discharged flue gas contains soot and carbon monoxide from the incomplete burning, there was a drawback in that environmental pollution countermeasures were difficult. Moreover, a method of using a secondary burning apparatus in an oil burner and suppressing the generation of flue gas from the incomplete burning is known, and an oil burner which additionally functions as an incinerator is also known, but a type having a prolonged control function required as a heating apparatus is not conventionally known.

While the use of chip or pellet fuels is beneficial in that the constant supply of fuel is possible, a furnace comprising a continuous supply device is required, and it is necessary to use a so-called open-type furnace. Thus, facilities that underwent strict environmental measures and the management thereof are required. Moreover, with chip and pellet fuels, there is a problem in that the production energy and cost required for the chipping and molding process cannot be ignored in comparison to fossil energy. Moreover, because fuming and environmental pollution generation occur in connection with the burning process, there is a problem in that the widespread use of wood-based fuels cannot be promoted without careful consideration.

As measures for dealing with the foregoing problem, Patent Document 1 proposes a complex burning system in which a first burner of gas or oil fuel is placed beneath a support plate of firewoods in a combustion casing of a fireplace-type heater, and a pair of burners is additionally placed therebehind. Nevertheless, generally speaking, in addition to the problem that the use of multiple burners is not an effective method, there is a problem in that clean exhaust gas cannot be obtained. With Patent Document 2 and Patent Document 3, proposed is a method of suppressing the fuming by burning firewood fuels according to an extremely slow method referred to as "maishinho (traditional Japanese heating method of lining raw wood in a furnace under the floor, adding lye thereto, and additionally placing charcoal fire thereon)", and, because prolonged fuming will occur at the initial stage of burning, in addition to having to handle the problem, a large amount of oxidation catalyst and an enormous furnace are required to obtain proper heating values, and it is difficult to extract industrially useful heat quantities.

In order to burn a solid fuel, which is a wood-based bulk fuel, in a boiler and prevent environmental pollution caused by flue gas, it is necessary to continuously supply a constant amount of fuel of the same shape and size in terms of the quality of fuel, reduce differences in the amount of resin, optimize the moisture content (dryness) and perform constant burning. Moreover, the operation of a boiler needs to clear numerous problems such as dealing with ash dust and exhaust gas, handling drains and handling residual ashes, and there is a problem in that only a large-scale facility is capable of taking the foregoing environmental measures.

Moreover, when wood-derived fuels are transported, accumulated, dried, cut and molded in order to improve the quality and facilitate the use of wood-derived fuels, there is a problem in that the energy and cost consumed in relation to the foregoing processes can no longer be ignored in comparison to the cost of fossil fuels comparable to the amount of energy of dried wood-derived fuels (up to 5,000 kcal/kg).

Because the flue gas of wood-based bulk fuels contains large amounts of water vapor, ash dust, soot, tar, odor, and dioxins, it is not easy to prevent the air pollution caused by the flue gas, and, in addition to numerous restrictions regarding the fuel shape, type, moisture content, and quality, there are numerous restrictions concerning air pollution, water pollution, thermal efficiency, handling method, and economic efficiency associated with the burning process, and the improvement of related technologies and devices is required.

As a result of recognizing the foregoing problems, the present inventors developed a burning technology and a boiler in which a large-capacity wood-based fuel, such as bulk woods, can be used easily, and a device having a function as a heating apparatus (Patent Document 4).

[Prior Art Documents]

[Patent Documents]

[Patent Document 1] Japanese Patent Application Publication No. 2006-183920
[Patent Document 2] Japanese Patent Application Publication No. 2004-245563
[Patent Document 3] Japanese Patent Application Publication No. 2003-343840
[Patent Document 4] Japanese Patent No. 4734462

[Summary of the Invention]

[Problems to be Solved by the Invention]

The process of placing a large amount of wood-based fuel, such as bulk woods, in a large-capacity, batch-type, closed-type furnace, lighting the fuel, and continuing a burning state by burning only the required amount of fuel for a long period is not easy. In other words, if it is possible to burn only a part of the added fuel and ultimately burn the entire amount of the fuel, the bulk fuel can be used efficiently. Moreover, because it is necessary to freely change the burning state and extract the required burning heat, suppress heat generation, additionally realize a dormant state (state of substantially stopping the progress of burning), and recover from the dormant state to a re-burn state for resuming operations, which are practically essential as the burning conditions, the foregoing problems of the burning technology need to be resolved. Patent Document 4 is able to resolve the foregoing problems.

Nevertheless, Patent Document 4 discloses the structure of the burning furnace required for burning a wood-based bulk fuel and a basic control method required for the burning process, and the burning control method is a fundamental method that is performed manually. Thus, the technology disclosed in Patent Document 4 entails a problem in which proficiency is required for operating the furnace, and it is necessary to develop a technology for performing automatic operational control.

An object of the present invention is to provide a burning apparatus of a solid fuel and a burning method of a solid fuel with improved burning efficiency, as well as a gas heating apparatus, a liquid heating apparatus, a power generation system and a cooling system.

[Means for Solving the Problems]

A burning apparatus of a solid fuel as one aspect of the present invention may comprise:

a burning furnace which burns the solid fuel;
a gas feeding device which feeds a gas containing oxygen to the burning furnace; and
an exhaust device which exhausts a flue gas discharged from a discharge port of the burning furnace,
wherein the burning apparatus further comprises a control unit which simultaneously controls the gas feeding device and the exhaust device and thereby controls a furnace pressure of the burning furnace.

Normally, a burning apparatus of a solid fuel is generally structured to suck in air from an air intake and discharge flue gas based on the discharge function of a chimney. Moreover, in certain cases, the burning apparatus may also be equipped with a gas feeding device such as a blower for supplying air, and an exhaust device for discharging the flue gas to the outside. Nevertheless, conventionally, there was no idea of simultaneously controlling the foregoing gas feeding device of air and the exhaust device of flue gas and thereby controlling the furnace pressure for burning the solid fuel in the furnace at a low temperature under reduced pressure.

The present inventors discovered that the burning of a solid fuel can be easily controlled by including a control unit which simultaneously controls the gas feeding device and the exhaust device and thereby controls the furnace pressure of the burning furnace, and thereby completed the present invention.

In the present invention, the control unit may additionally control a burning capacity of the burning furnace by controlling the gas feeding device and the exhaust device.

By controlling the temperature of the burning furnace, the temperature of the burning furnace will not become a high temperature, and it is thereby possible to suppress the burning furnace from becoming damaged. Moreover, when the burning furnace is configured from a chromium-based material, hexavalent chromium is easily generated when the temperature exceeds 1000°C. However, because the temperature of the burning furnace can be controlled to be 1000°C or lower, the problem of the generation of hexavalent chromium can be avoided. Generally speaking, in the case of a biomass fuel, it is desirable to perform burning at a high temperature of 1000°C to 1100°C in order to completely burn the fuel and suppress the generation of smoke and soot, and there is a problem in that the burning is performed under a reducing atmosphere.

In the present invention, the control unit may additionally control a flue gas temperature in the discharge port of the burning furnace to be 500°C or lower, preferably 400°C or lower, by controlling the gas feeding device and the exhaust device. By controlling the flue gas temperature in the discharge port of the burning furnace to be 500°C or lower, preferably 400°C or lower, it is thereby possible to more reliably suppress the burning furnace from becoming damaged.

In the present invention, the control unit may additionally control a level of an oxidizing atmosphere of the burning furnace by controlling the gas feeding device and the exhaust device.

By controlling the level of the oxidizing atmosphere at a low temperature, it is possible to suppress the reduction of chromium that occurs under a high temperature and a reducing atmosphere when the burning furnace is configured from a chromium-based material, and thereby reliably prevent the problem of hexavalent chromium.

In the present invention, while the solid fuel is being burned in the burning furnace, the control unit may control the furnace pressure of the burning furnace to be -10 Pa or less. By causing the furnace pressure of the burning furnace to be -10 Pa or less, the present inventors discovered that, because burning that normally occurs under a normal pressure can be promoted at a low temperature, the burning capacity can be easily controlled by contrarily increasing the furnace pressure and suppressing the burning. Moreover, in cases where a fuel adding port for adding a solid fuel during the burning process is provided, it is possible to prevent flue gas and ash dust from being discharged from the burning furnace to the outside when the fuel adding port is opened. When the furnace pressure is -10 Pa or less, because pressure is not applied toward the outside, it is possible to provide a door for closing a large fuel adding port without having to use a thick and large steel material. Because the furnace pressure of the burning furnace is a negative pressure, it is not necessary to use a robust fixture upon providing the door. It is also possible to successively and safely supply the solid fuel into the furnace, and the continuous supply of fuel is also facilitated. As a result of the furnace pressure of the burning furnace being -10 Pa or less, flue gas from the incomplete burning will not be discharged from the fuel adding port when the burning furnace is opened and, therefore, the problem of backfire will not occur easily.

With existing boilers, oxygen in the air is supplied into the furnace by the negative pressure based on the chimney effect, but the pressure difference relative to the outside air is roughly -10 Pa. Draft of the chimney based on the combustion gas of a high temperature resulting from the burning of the combustion air and the fuel is the chimney effect, and the flue gas is thereby discharged outside the furnace, and, while there are cases where an induction fan is placed on a flue for collecting the powder dust contained in the flue gas and the flue gas is supplied to a cyclone to collect the powder dust, there are no conventional examples in which the furnace pressure is considerably reduced using the exhaust device for the purpose of lowering the burning temperature of the fuel.

In the present invention, the burning apparatus of a solid fuel may further comprise:

a supply port provided to the burning furnace for supplying the solid fuel; and
a door provided for blocking the supply port,

wherein a heat-resistant sealing member for preventing infiltration of outside gas may be provided at least to a part of a periphery of the supply port and at a part where pressing force is applied by the door, and

wherein the sealing member may be configured by containing heat-resistant glass fiber, carbon fiber, or, ceramic fiber for the same objective, as its primary component.

As a result of the sealing member being configured by containing glass fiber, carbon fiber, or ceramic fiber as its primary component, when the burning furnace becomes a positive pressure, it is possible to avoid the weakening of the pressing force of the door and escape of gas in the furnace through a fibrous sealing member, and prevent the pressure in the burning furnace from becoming an excessively high pressure.

In the present invention, a condensing unit which condenses water vapor contained in a flue gas discharged from the burning furnace may be provided between the burning furnace and the exhaust device, and

the condensing unit may be configured from a heat exchanger for converting heat generated from condensation of the water vapor into a liquid medium or a gas medium.

By condensing the water vapor contained in the flue gas and converting the heat generated from the condensation into a liquid medium or a gas medium, the heat generated from the condensation can be effectively used, and the burning efficiency can be improved. Generally speaking, the water vapor in the flue gas is not collected, and is exhausted. Moreover, because the heat of the flue gas is converted into a secondary heating medium of liquid or gas through the heat exchanger, the temperature of the flue gas will decrease. Thus, it is possible to suppress the exhaust path such as a chimney or the like from becoming damaged. Moreover, because the water vapor is condensed, the water vapor contained in the flue gas will decrease, and it is possible to suppress the exhaust path from becoming damaged from the water vapor by that much. The heat exchanger is able to lower the temperature of the flue gas. By rapidly cooling the high temperature flue gas, which is, for instance, 800°C or higher at the inlet of the condensing unit, to be, for instance, 200°C or lower inside the condensing unit, recombination of the decomposed dioxins can be suppressed.

In the present invention, the burning apparatus of a solid fuel may further comprise: an exhaust path for exhausting a flue gas provided between the discharge port of the burning furnace and the exhaust device;

an oxygen supply path for supplying a gas containing oxygen which is connected to the exhaust path; and

an ignition unit provided to the exhaust path,

wherein the flue gas may be mixed with a gas containing oxygen supplied from the oxygen supply path, and burned with fire induced by the ignition unit.

Even when a flue gas of incomplete burning is discharged from the discharge port of the burning furnace as a result of burning the flue gas, unburned gas components such as carbon monoxide and hydrocarbons contained in the flue gas can be burned in the secondary burning part. Moreover, even when attempting to burn the flue gas with an auxiliary burner or the like, oxygen that is sufficient for burning the flue gas is not supplied to the burner. The foregoing configuration is able to supply oxygen to the exhaust path for burning the flue gas, while reducing the amount of oxygen supplied to the burning furnace, without increasing the furnace pressure of the burning furnace. Preferably, the air-supply nozzle directly supplies the gas containing oxygen to the exhaust path.

In the present invention, the oxygen supply path may pass through the burning furnace and may be configured so that the gas containing oxygen is heated by the heat in the burning furnace.

Because the oxygen supply path is provided to pass through the burning furnace, the gas containing oxygen in the oxygen supply path is heated with the heat of the burning furnace. As a result of the gas containing oxygen being heated, burning of that gas is promoted when the gas is mixed with the flue gas and burned, and the burning of the flue gas is thereby facilitated.

In the present invention, the oxygen supply path in the burning furnace may be provided so as to pass through an upper part in the burning furnace.

Because combustion gas components rise in a burning furnace, burning is preferably performed at the upper part of the burning furnace. Thus, by placing the oxygen supply path at the upper part of the burning furnace, the gas containing oxygen in the oxygen supply path can be more easily heated with the heat generated in the burning furnace.

In the present invention, the ignition unit may be provided more downstream of the exhaust path than a part where the oxygen supply path and the exhaust path are connected.

In the present invention, a burner for burning the flue gas may be provided in the exhaust path, and

the burner may be provided more downstream of the exhaust path than a part where the oxygen supply path and the exhaust path are connected, and additionally function as the ignition unit.

When the flue gas is burned with a burner, the temperature of the flue gas will rise to 600 to 1000°C. Thus, dioxins can be decomposed. Moreover, because the burner also functions as an ignition unit upon mixing and burning the gas containing oxygen supplied from the oxygen supply path and the flue gas, the number of components can be reduced.

In the present invention,

the oxygen supply path may be connected to the gas feeding device,
a through hole may be provided to the oxygen supply path in the burning furnace, and a part of the gas containing oxygen in the oxygen supply path may be supplied to the burning furnace through the through hole, and the gas containing oxygen that was not supplied to the burning furnace may pass through the oxygen supply path and be mixed with the flue gas.

In the present invention,
the oxygen supply path may pass through an upper part in the burning furnace, and a through hole of the oxygen supply path may be provided to an upper part in the burning furnace.

Because burning components rise in a burning furnace, burning is preferably performed at the upper part of the burning furnace. Thus, by placing the oxygen supply path at the upper part of the burning furnace, the gas containing oxygen in the oxygen supply path can be more easily heated with the heat generated in the burning furnace.

In the present invention, a tip of the oxygen supply path on a side of the exhaust path may be of a nozzle shape. Consequently, the flue gas and the gas containing oxygen are mixed, and oxygen can be reliably supplied to the part to be burned.

In the present invention, a catalytic part for promoting oxidation of components of the flue gas may be provided in the exhaust path. As a result of this kind of catalytic part being provided, flue gas can be more reliably oxidized, and dioxins can also be decomposed.

In the present invention, the catalytic part may be configured from honeycomb-type ceramics having oxides of alkaline earth metals as its primary component. As a result of the catalytic part being configured from the foregoing ceramics, flue gas can be effectively oxidized.

In the present invention, the catalytic part may be placed in an oxidizing atmosphere upon burning and the gas feeding device and the exhaust device may be controlled so that a temperature of the catalytic part becomes 300°C or higher. It is thereby possible to more reliably decompose dioxins.

In the present invention, a flow rate of the flue gas flowing in the exhaust path may be set to a flow rate in which, upon burning, gas of a volume of a space from the gas feeding device to the exhaust device flows at a rate of 0.1 to 2 seconds. Based on this flow rate, control of the burning chemical reaction and maintenance of a high heat exchange function can be facilitated. Generation of dioxins can also be suppressed.

A burning apparatus of a solid fuel as one aspect of the present invention comprises: a burning furnace which burns the solid fuel; and
an exhaust device which exhausts a flue gas discharged from a discharge port of the burning furnace,
wherein, while the solid fuel is being burned in the burning furnace, the exhaust device controls the furnace pressure of the burning furnace to be a negative pressure of -10 Pa or less.

According to the foregoing configuration, the solid fuel can be easily burned.

A burning apparatus of a solid fuel as one aspect of the present invention comprises: a burning furnace which burns the solid fuel; and
an exhaust device which exhausts a flue gas discharged from a discharge port of the burning furnace,
wherein the burning apparatus of a solid fuel further comprises:

an exhaust path for exhausting a flue gas provided between the discharge port of the burning furnace and the exhaust device;
an oxygen supply path for supplying a gas containing oxygen which is connected to the exhaust path; and
an ignition unit provided to the exhaust path,

wherein the flue gas is mixed with a gas containing oxygen supplied from the oxygen supply path, and burned with fire induced by the ignition unit.

According to the foregoing configuration, the flue gas discharged from the burning furnace can be reliably burned.

A gas heating apparatus of the present invention heats a gas with a heat generated by the burning apparatus of a solid fuel of the present invention.

A liquid heating apparatus of the present invention heats a liquid with a heat generated by the burning apparatus of a solid fuel of the present invention.

A power generation system of the present invention comprises:

an evaporator for evaporating a liquid heating medium into a gas by using a heat generated by the burning apparatus of a solid fuel of the present invention; and
a turbine for converting energy of the gas generated in the evaporator into a rotary motion.

A cooling system of the present invention comprises:

an evaporator for evaporating a liquid heating medium into a gas by using a heat generated by the burning apparatus of a solid fuel of the present invention;

a condenser for condensing the gas generated in the evaporator; and

an evaporator for evaporating a heating medium condensed in the condenser and absorbing thermal energy from a cooling medium.

A burning method of a solid fuel as one aspect of the present invention comprises the steps of:

a gas feeding device feeding a gas containing oxygen to a burning furnace which burns the solid fuel;

an exhaust device exhausting a flue gas discharged from a discharge port of the burning furnace; and

a control unit simultaneously controlling the gas feeding device and the exhaust device and controlling a furnace pressure of the burning furnace to burn the solid fuel.

A burning method of a solid fuel as one aspect of the present invention comprises the step of:

an exhaust device which exhausts a flue gas discharged from a discharge port of a burning furnace for burning a solid fuel controlling the furnace pressure of the burning furnace to be -10 Pa or less and burning the solid fuel while the solid fuel is being burned in the burning furnace.

A burning method of a solid fuel as one aspect of the present invention comprises the steps of:

an exhaust device exhausting a flue gas discharged from a discharge port of the burning furnace; and

supplying a gas containing oxygen to an exhaust path for exhausting a flue gas provided between the discharge port of the burning furnace and the exhaust device,

mixing the gas containing oxygen and the flue gas, and burning the flue gas with fire induced by an ignition unit provided to the exhaust path.

In the present invention, there is no particular limitation regarding the term "solid fuel" so as long as it can be oxidized and burned, including wood-based fuel, coal-based fuel, biomass (organisms), plastics, and petroleum products.

[Brief Description of the Drawings]

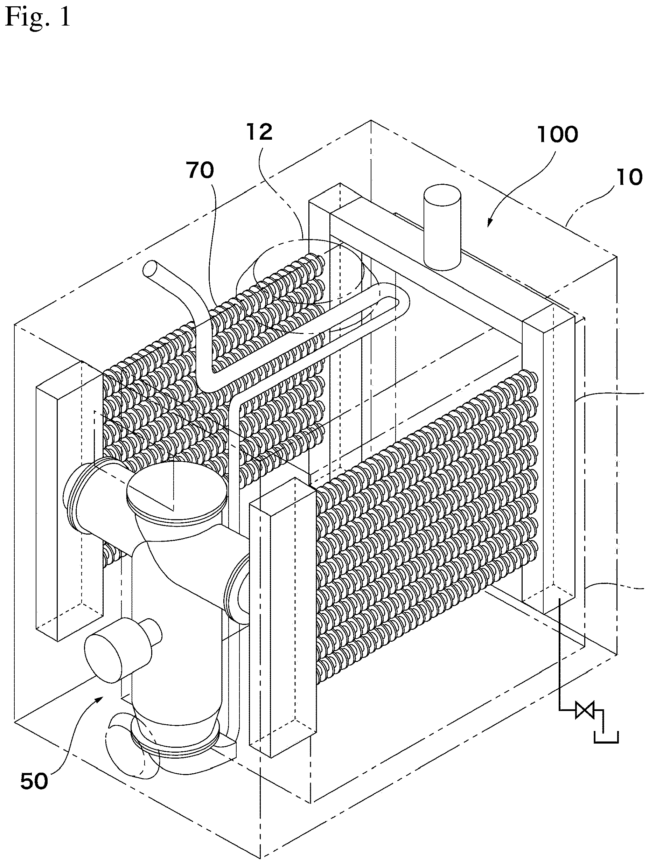

[Fig. 1] Fig. 1 is a perspective view schematically showing the burning apparatus of a solid fuel according to an embodiment of the present invention.

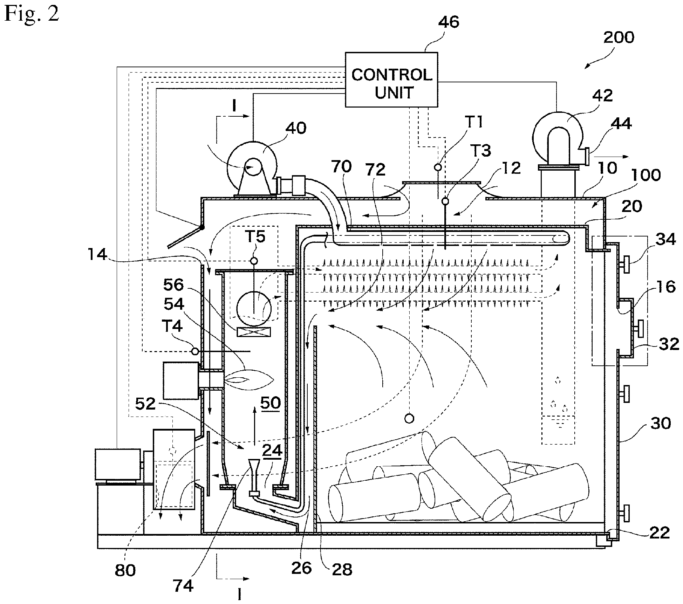

[Fig. 2] Fig. 2 is a cross section schematically showing the burning apparatus of a solid fuel according to an embodiment of the present invention.

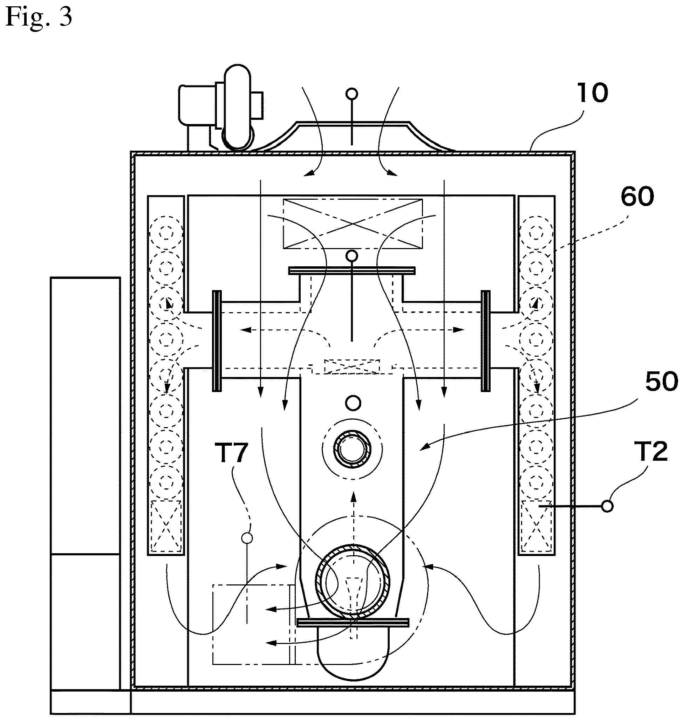

[Fig. 3] Fig. 3 is a diagram schematically showing the cross section along line I-I of Fig. 2.

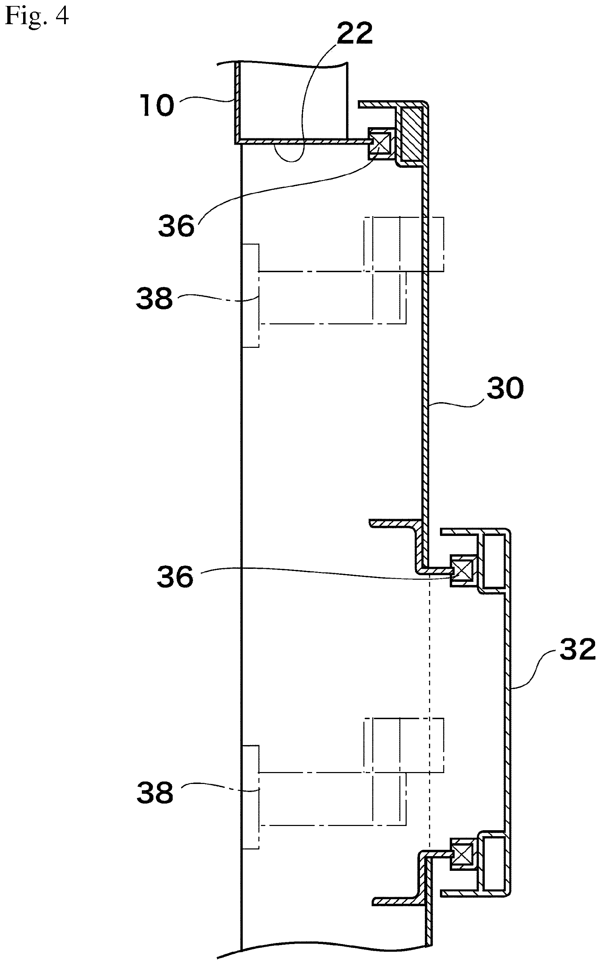

[Fig. 4] Fig. 4 is a diagram schematically showing the cross section of a part of the burning furnace, a part of the door, and the small door.

[Fig. 5] Fig. 5 is a diagram schematically showing the cross section of the heat exchanger.

[Fig. 6] Fig. 6 is a diagram schematically showing the liquid heating apparatus according to an embodiment of the present invention.

[Fig. 7] Fig. 7 is a diagram schematically showing the power generation system according to an embodiment of the present invention.

[Fig. 8] Fig. 8 is a diagram schematically showing the cooling system according to an embodiment of the present invention.

[Best Mode for Carrying Out the Invention]

A preferred embodiment of the present invention is now explained with reference to the appended drawings.

1. Background and basic configuration of burning apparatus

With a solid fuel, unlike a gas fuel or a liquid fuel, the overall fuel cannot be burned by being set at a uniform temperature. The only way to burn the solid fuel at a uniform temperature is to burn a powdered fuel by spraying it from a nozzle into a space of a high temperature. Nevertheless, when the size of the solid fuel is increased to the size of firewoods or logs, while surface burning will advance, internally the solid fuel will be unburned, and burned parts and highly unburned parts due to incomplete burning will inevitably coexist. When incomplete burning occurs, char as a hydrocarbon, carbon monoxide, ash dust and other smoke and soot are generated due to thermal decomposition. Accordingly, in order to prevent air pollution and prevent the generation of PM 2.5, it is necessary to suppress the generation of smoke and soot, completely burn the solid fuel, and clean the exhaust gas.

With a furnace that burns a wood-based bulk fuel, generally speaking, because an advanced incomplete burning state will occur, no device capable of keeping the exhaust gas clean is known, whether a batch-type furnace, a firewood boiler, a compact heating apparatus or the like, and, generally speaking, it is difficult to realize clean burning. Moreover, it is also difficult to keep clean the exhaust gas of automobile engines and boilers that use heavy oils and light oils, which are much easier to burn than solid fuels, as their fuels.

In a burning furnace for solid fuels, the control of the burning capacity involves the control of the air supply rate, but when the air volume increases or decreases suddenly, it is known that incomplete burning will increase and a large amount of flue gas and ash dust will be generated. Accordingly, when controlling the heating value, there is a problem in that the increase and decrease of the air supply must be controlled properly.

Components of the wood-derived fuel are cellulose, hemicellulose, lignin, non-volatile components, trace metals, and moisture, but the primary burning component is cellulose, and, based on its burning, cellulose molecules ($C_{12}H_{20}O_{11}$) become decomposed and become carbon dioxide and water vapor as shown in Math (I) below ($N_2$ gas in the air is excluded for simplification).

Math 1

$$(C_{12}H_{20}O_{11}) + Air\ (11.5\ O_2) = 10\ H_2O + 12\ CO_2$$

Hydrocarbons, which burn at even a relatively low temperature, are preferentially burned by the oxygen contained in the cellulose, and the carbon that burns at a high temperature tends to become oxidized mainly by the supplied air. Thus, when the thermal decomposition of the fuel starts under the supply of air, burning is accelerated by the oxygen contained in the fuel, and there is a problem in that, when the heating of the fuel advances, burning is excessively advanced based on the self-discharged oxygen, and control of the burning capacity becomes difficult.

When the wood-derived fuel is completely burned, $H_2O$ and $CO_2$ are discharged in the exhaust gas, and the amount of carbon dioxide (54.5 vol%) relative to the amount of water vapor (45.5 vol%) is 12-to-10. Furthermore, when moisture represented with the moisture content and humidity containing air for use in burning are added, a large amount of water vapor will be generated due to the burning. When the moisture content of the fuel becomes 20 Wt% or 40 Wt%, the generated water vapor becomes 61 vol% or 68 vol% relative to $CO_2$, and there is a problem in that burning failure; that is, incomplete burning, will occur as a result of approximately half of the burning heat being consumed in the latent heat of vaporization.

Accordingly, with the wooden biomass boiler according to this embodiment, the temperature of the flue gas that passed through the heat exchanger is cooled to 100°C or lower, which enables the collection of the condensation heat of a large amount of water vapor, and the dioxins that were thermally decomposed in the reaction duct are rapidly cooled to a low temperature in the heat exchanger, and the recombination thereof can thereby be suppressed.

With a wood-derived fuel, water vapor is generated and decomposition of cellulose components is promoted pursuant to the rise in temperature, hydrogen gas $H_2$, methane gas $CH_4$, carbon monoxide CO and other easily burnable low-molecular gases are generated and burned first, and the decomposition of lignin will be last. Consequently, char, which is a low molecular mass hydrocarbon, is mainly generated, and water-soluble methanol, acetic acid, phenols, and tar component are also generated, and, in certain cases, dioxins are also generated, and the thermal decomposition temperature is set broadly from 200°C to 500°C as shown in the following table. Nevertheless, for the decomposition of dioxins, generally speaking, a retention time of 2 seconds or longer is required in an oxidizing atmosphere of 800°C or higher.

As described above, when thermal decomposition and oxidation advance due to the partial burning of the fuel, the periphery is heated, the temperature rises, and burning is spread further. With the burning of a wood-based bulk fuel, incomplete burning will inevitably occur, and, because carbon monoxide CO, carbohydrates $C_nH_m$, carbides (soot), odor, or dioxins are added to the flue gas, these need to be completely oxidized to maintain clean flue gas.

[Table 1]

| Component of wood-derived fuel and thermal decomposition temperature | |
|---|---|
| Component | Thermal decomposition temperature |
| $H_2O$ (free water) | 100°C |

(continued)

| Component of wood-derived fuel and thermal decomposition temperature | |
| --- | --- |
| Component | Thermal decomposition temperature |
| $H_2O$ (bonding water) | 110°C |
| Hemicellulose | 200 to 260°C |
| Cellulose | 240 to 340°C |
| Lignin | 280 to 500°C |

In order to control the burning of the bulk wood-derived fuel placed in the furnace, whether it be manual operation or automatic operation, it was discovered that the combination of the following burning processes is required.

(1) Initial burning in which heating, drying and lighting are required
(2) Regular burning in which a large amount of fuel burns together with the flame
(3) Live charcoal burning in which charcoal-type carbides are mainly burned
(4) Dormant state in which the burning is stopped and a source for making a fire is contained in the charcoal in the burnt wooden pile and wood ash
(5) Re-burn state of returning from the dormant state to the burning state
(6) Reheat burning of adding fuel and extending the burning time
(7) Quenching of extinguishing the fire

The burning operation that is suitable for the foregoing processes of (1) to (7) requires manual proficiency, and an automatic operation method that can be operated by anyone is required, and a proper control method is demanded.

The heating value of the furnace is the sum of all heating values from primary burning to quaternary burning, the latent heat of condensation and the flue gas heat quantity in the tubular heat exchanger, and it was necessary to discover the proper measurement method of the burning capacity. When the burning capacity increases, there are structural problems regarding the heat resistance limit of the furnace, the reaction duct, the catalyst, and the heat exchanger, and the development of a practical burning system for realizing a clean flue gas is demanded.

In the operation of a furnace, because a flue gas tends to discharge smoke and soot or ash dust that cause the problem of PM 2.5, or dioxins, the flue gas needs to be cleaned. Moreover, as emissions associated with the burning, there are flue gas from the chimney, drain (pyroligneous acid) as the condensate generated in the flue, and wood ash of the burning residue as metal oxides become accumulated at the bottom of the furnace.

According to this embodiment, in light of these numerous problems, it is possible to burn the solid fuel in the form of the least expensive bulk without having to consume energy for the processing of a wood-based solid fuel (wood-based bulk fuel), freely change the burning state and effectively use necessary burning heat, and provide an automatic burning control method of a burning furnace for a wood-based bulk fuel capable of facilitating burning control.

Because the wood-based bulk fuel boiler provided based on this embodiment can least expensively use the wood-based bulk fuel which is distributed locally, when the operation is facilitated based on automatic control, it will become easy to use, at a high thermal efficiency, a gas heating apparatus, a drying apparatus, or a hot water supply device which uses this wood-based bulk fuel boiler as the heat source, and this will open a road for using low-cost thermal energy. Moreover, this boiler is also demanded of a zero emission-type burning method with high air tightness suitable for environmental measures, and cultivation of use also in the ashing process of pollution substances.

2. Specific configuration of burning apparatus

The burning apparatus 100 of a solid fuel according to this embodiment includes a burning furnace 20, a gas feeding device 40 for supplying gas containing oxygen to the burning furnace 20, and an exhaust device 42 for discharging the gas in the burning furnace 20. The gas feeding device 40 and the exhaust device 42 are controlled by the control device 46.

The burning apparatus 100 of a solid fuel exhausts the flue gas generated in the burning furnace 20 from the air outlet 44 through an exhaust path. Midway in the exhaust path, provided are a reaction duct 50 for burning the flue gas generated in the burning furnace 20, and a heat exchanger 60 for heat-exchanging the flue gas generated from the reaction duct 50 into a gas medium or a liquid medium.

A door 30 for supplying a solid fuel is provided to the burning furnace 20. The burning furnace 20 is surrounded by the body 10. The heat exchanger 60 exchanges heat with the gas or liquid heating medium supplied into the body 10. The body 10 may be provided, for instance, so that space is created between the front face of the burning furnace 20 and other faces. More specifically, the body 10 can also cover the burning furnace 20 so that predetermined space is created between the rear face and the lateral face and the top face of the burning furnace 20.

The burning furnace 20 burns the solid fuel. The burning furnace 20 is supplied with the gas containing oxygen that is supplied from the gas feeding device 40. The gas containing oxygen may be supplied from the upper part of the fuel furnace. The burning furnace 20 is provided with a discharge port 24 for discharging the flue gas. The discharge port 24 may be provided, for instance, at a lower part of the burning furnace 20. The burning furnace 20 may be supplied, for instance, with the gas containing oxygen from the top face side of the burning furnace 20 by using an air-supply nozzle. The discharge port 24 for discharging the flue gas may also be provided at the lower part of the rear face of the burning furnace 20. An inside flue 26 for guiding the flue gas in the burning furnace 20 to the discharge port 24 may also be provided. The inside flue 26 may, for instance, guide the flue gas from the upper side of the burning furnace 20 to the discharge port 24. The inside flue 26 may be configured by providing a partition plate 28 formed of heat-resistant steel so as to face the wall surface on the side of the discharge port 24. By providing the inlet of the inside flue 26 at the upper part of the burning furnace 20, the combustion gas components are guided to the upper side, and the combustion gas components can be more easily burned at the upper part of the burning furnace 20.

The burning furnace 20 includes a fuel supply port 22 for supplying the solid fuel, and a door 32 which is provided for blocking the fuel supply port 22. A sealing member 36 for preventing the infiltration of external gas is provided around the supply port of the burning furnace 20. The sealing member 36 is provided at the part where pressing force is applied by the door 30. The sealing member 36 is configured from heat-resistant glass fiber, ceramic fiber, or carbon fiber as its primary component. As a result of the sealing member 36 being configured from glass fiber, ceramic fiber, or carbon fiber as its primary component, when the burning furnace 20 becomes a high pressure, the pressing force of the door 30 is weakened, gas inside the furnace escapes from the glass fiber, ceramic fiber, or carbon fiber, and it is thereby possible to prevent the pressure in the burning furnace 20 from becoming an excessively high pressure. The door 30 is provided, for instance, on the front face side of the body 10. The door 30 can be provided to the burning furnace 20 in an openable/closable manner by using, for instance, a hinge 38. The door 30 may be provided with a fuel adding port 16 for enabling the addition of fuel, and a small door 32 for enabling the opening/closing of the fuel adding port 16. The small door 32 may also be provided to the door 30 in an openable/closable manner by using, for instance, a hinge 38.

The burning furnace 20 may be formed from standard steel plates or heat-resistant steel plates. Either side of the door 30 is provided with, for instance, a plurality of handles 34 for adjusting the clamping pressure of the door 30, and, by tightening the door 30 by using the handles 34, the interference of packing as the sealing member 36 can thereby be adjusted across a wide range. Moreover, by providing a furnace opening at the upper part of the door 30, in the same manner as the door 30, the clamping pressure of the small door 32 which opens/closes the furnace opening can also be adjusted by adjusting the interference of packing as the sealing member 36 provided to the small door 32 by tightening the handles 34.

The gas feeding device 40, for instance, can be a fan capable of frequency trimming in which an electromagnetic valve is provided to the outlet. The gas feeding device 40 may have a structure capable of supplying air with the electromagnetic valve at an accurate air flow between a minimum air volume of 0% and a maximum air volume of 100%, the supply of trace amounts of air capable of maintaining the source for making a fire can be guaranteed in a dormant state for stopping the burning of the burning furnace 20, and the air can be completely blocked to quench the fire. The exhaust device 42, for instance, can be a fan capable of frequency trimming in which an electromagnetic valve is provided to the outlet. The gas feeding device 40 and the exhaust device 42 may be controlled, for instance, based on inverter control.

The control unit 46, for instance, detects the temperature based on a temperature sensor, and controls the gas feeding device 40 and the exhaust device 42. By simultaneously controlling the gas feeding device 40 and the exhaust device 42 with the control unit 46, the internal pressure of the burning furnace can be adjusted. The pressure of the burning furnace 20 can be set, for instance, to be -10 Pa or less, preferably within a range of less than -10 Pa to -1000 Pa or more, more preferably within a range of less than -10 Pa to -500 Pa or more, even more preferably within a range of -50 to -500 Pa, and most preferably within a range of -150 Pa to -300 Pa. The proper value of the furnace pressure can be selected based on the structure and functions of the furnace. The control unit 46 may be configured from a control panel having a control circuit, or the control device 46 may be configured from a central processing unit (CPU or the like), a ROM and a RAM. The control unit 46 may have the function of controlling the respective components of the burning apparatus 100 of a solid fuel. The control unit 46 may also the control the respective components based on the temperature measured with the temperature sensors T1 to T8.

By controlling the furnace pressure of the burning furnace 20 to be -10 Pa or less, the burning can be promoted at a low temperature and more easily controlled. Moreover, when there is a fuel adding port for adding a solid fuel during the burning process, it is possible to prevent the flue gas and ash dust from being discharged outside from the burning furnace 20 when the fuel adding port 16 is opened. When the furnace pressure is -10 Pa or less, because pressure is not applied externally, it is possible to provide a door 30 for closing a large fuel supply port without having to use thick and large steel materials. When the furnace pressure of the burning furnace 20 is a negative pressure, a robust fixture does not need to be used when the door 30 is provided. The solid fuel can be successively supplied safely and the fuel can be continuously supplied.

With an existing boiler, air is supplied into the furnace and exhausted by the exhaust device 42, but because the furnace pressure is not controlled, the furnace pressure based on the combustion gas tends to become a positive pressure, and approximately +500 Pa is the operable limit pressure. As a result of the furnace pressure of the burning furnace 20 being -10 Pa or less, because the flue gas from the incomplete burning will not be discharged from the open part when the burning furnace 20 is opened, it will be easier to prevent accidents caused by backfire.

By simultaneously controlling the gas feeding device 40 and the exhaust device 42 with the control unit 46, the temperature, oxidizing atmosphere level, and burning of the solid fuel in the burning furnace 20 can be controlled. The flue gas temperature at the discharge port 24 of the burning furnace 20 can be set to 500°C or lower, preferably 400°C or lower, and more preferably 200 to 400°C. Moreover, by controlling the burning of the solid fuel, it is possible to prevent the solid fuel from becoming burned at once.

Normally, the burning apparatus 100 of a solid fuel generally has a structure of incorporating air from the air intake, and discharging the flue gas based on the discharge function of the chimney. Moreover, depending on the case, there were cases of providing a supply device such as a blower for supplying air, an exhaust device for discharging the flue gas to the outside, and a bug filter, a slewing device, and a cyclone dust collector for collecting powder dust from the flue gas. Nevertheless, previously there was no concept of simultaneously controlling the supply device of air and the exhaust device of flue gas and causing the furnace pressure to be a negative pressure, and thereby controlling the burning of the solid fuel.

The present inventors discovered that, by including a control unit 46 which controls the furnace pressure of the burning furnace 20 by simultaneously controlling the gas feeding device and the exhaust device 42, the burning of the solid fuel can be easily controlled.

According to this embodiment, because the temperature in the burning furnace 20 can be controlled under a reduced pressure and prevented from becoming a high temperature, damage to the burning furnace 20 can be suppressed. Moreover, when the burning furnace 20 is formed from a chromium-based material, hexavalent chromium tends to become generated when the temperature exceeds 1000°C. However, because the temperature of the burning furnace 20 can be controlled to be 1000°C or lower, there will be no problem of the generation of hexavalent chromium. Generally speaking, in the case of a biomass fuel, the temperature in the burning furnace 20 is often increased to 1000 to 1100°C in order to approach the conditions of complete burning.

According to this embodiment, because the level of an oxidizing atmosphere can be controlled easily, when the burning furnace 20 is formed from a chromium-based material, the reduction of chromium generated under a reduction environment can be suppressed, and the problem of hexavalent chromium can be reliably prevented.

The reaction duct 50 is used for completely burning the flue gas. Because the flue gas can be burned with the reaction duct 50, the incompletely burned flue gas can be completely burned easily. The reaction duct 50 may be provided with, for instance, a first flue gas burning part 52, a second flue gas burning part 54 and a third flue gas burning part 56. The reaction duct 50 may be formed from a heat-resistant steel plate. When the reaction duct 50 and the burning furnace 20 are formed from different materials, because the thermal expansion will be different, the connections of the reaction duct 50 and the burning furnace 20 may mutually be connected with a flexible structure, and the large expansion and contraction caused by heat can be freely absorbed.

The first flue gas burning part 52 is used for mixing the flue gas and the gas containing oxygen and burning the flue gas with an ignition means such as a burner as the source for making a fire. The gas containing oxygen is supplied from the oxygen supply path 70. The oxygen supply path 70 may be provided so as to pass through the burning furnace 20. Consequently, the oxygen that passes through the oxygen supply path 70 can be heated with the burning furnace 20. The oxygen supply path 70 is connected to the gas feeding device 40, a through hole 72 is provided to the oxygen supply path 70 within the burning furnace 20, and, in addition to a part of the gas containing oxygen in the oxygen supply path 70 being supplied to the burning furnace 20 through the through hole 72, the gas containing oxygen that was not supplied to the burning furnace 20 may pass through the oxygen supply path 70 and be mixed with the flue gas. The first flue gas burning part 52 may induce a fire of the burning means applied in the second flue gas burning part 54 and burn the flue gas. The temperature of the flue gas in the first flue gas burning part 52 may be set, for instance, within a range of 200 to 600°C, but it is more preferably set to be within a range of 250 to 500°C. A tip 74 of the oxygen supply path 70 may be formed in a nozzle shape, and the gas containing oxygen may be discharged from the tip 74 to the first flue gas burning part 52, and mixed with the flue gas containing unburned components.

The oxygen supply path 70 may be provided so as to pass through the upper part within the burning furnace 20, and the through hole 72 of the oxygen supply path 70 may be provided to the upper part within the burning furnace 20. Because the burning components rise in the burning furnace 20, burning is preferably performed at the upper part of the burning furnace 20. Thus, by placing the oxygen supply path 70 at the upper part of the burning furnace 20, the gas containing oxygen in the oxygen supply path 70 can be more easily heated with the heat generated in the burning furnace 20.

Because the first flue gas burning part 52 is provided, even if incompletely burned flue gas is discharged from the discharge port 24 of the burning furnace 20, the carbon monoxide and hydrocarbons contained in the flue gas can be burned. Even when attempting to burn the flue gas with an auxiliary burner or the like, oxygen that is sufficient for burning the flue gas is not supplied to the burner. The foregoing configuration is able to directly supply oxygen to the exhaust path in the reaction duct 50 for burning the flue gas, while reducing the amount of oxygen supplied to the burning furnace 20, without increasing the furnace pressure of the burning furnace 20.

As a result of the oxygen supply path 70 being provided so as to pass through the burning furnace 20, the gas containing oxygen in the oxygen supply path 70 is heated with the heat of the burning furnace 20. As a result of the gas containing oxygen being heated, burning of that gas is promoted when the gas is mixed with the flue gas and burned, and the burning of the flue gas is thereby facilitated.

Because the burning components rise in the burning furnace 20, burning is preferably performed at the upper part of the burning furnace 20. Thus, by placing the oxygen supply path 70 at the upper part of the burning furnace 20, the gas containing oxygen in the oxygen supply path 70 can be more easily heated with the heat generated in the burning furnace 20.

The second flue gas burning part 54 burns the unburned flue gas remaining in the first flue gas burning part 52 by using a burning means such as a burner. The temperature of the flue gas in the second flue gas burning part 54 can be set, for instance, to 600 to 1000°C. As a result of burning the flue gas with a burner, the temperature of the flue gas will normally rise to 800 to 900°C. Thus, dioxins can be easily decomposed.

The third flue gas burning part 56 can be configured from a catalytic part for further promoting the oxidation of flue gas components. The catalytic part may be configured from honeycomb-type ceramics having oxides of alkaline earth metals as its primary component. In particular, the catalytic part is preferably configured from ceramics that can be used at 300°C or higher, and preferably at 1000°C. The catalytic part may be configured to be placed in an oxidizing atmosphere during the burning process and the temperature may be set, for instance, within a range of 300 to 1000°C. Under an oxidizing atmosphere, the gas feeding device 40 and the exhaust device 42 can be controlled and the feed rate of the gas containing oxygen can thereby be increased. Dioxins can also be decomposed in the third flue gas burning part 56.

Chemical components of the oxidation catalyst suitable for the purpose of this invention are, for instance, $CaOSiO_2$, $CaOAl_2O_3$, or $MgOAl_2O_3$, their melting points are respectively 1540°C, 1600°C, and 2135°C, and their practical maximum temperatures are respectively 900°C, 1000°C, and 1100°C. All of the foregoing chemical components can be obtained by molding an equivalent amount of mixtures in units of $CaO$, $SiO_2$, $MgO$, or $Al_2O_3$, and thereafter sintering the mixtures at a high temperature under an oxidizing atmosphere. While the sintering temperature does not need to be prescribed because it depends on the grain size of the raw material to be used, it would be desirable to set the sintering temperature to be 200°C to 400°C higher than the practical temperature. Incidentally, the foregoing chemical components of the oxidation catalyst do not need to be limited to the three types described above, and, in addition to being configured with mutual mixed components, they may also excessively contain certain metal oxides, such as $SiO_2$, as a sintering auxiliary agent.

Because the flue gas is directly oxidized based on a chemical reaction in a honeycomb-based space surrounded by the surfaces or walls of the oxidation catalyst, there is no need to use expensive noble metals such as Pt or Pd. Moreover, the use these noble metals and catalyst activities are disadvantageous due to the oxidation and evaluation at high temperatures and consumption thereof caused by the chemical reaction.

It would be desirable to adopt a honeycomb structure in order to increase the contact area of the flue gas and the oxidation catalyst, and, with a wood-based bulk fuel boiler, there is no need to considerably lower the flue gas resistance as with an automobile engine, and, when the cell density per square inch is set to be 200 to 300, the pressure drop can be limited to be several 10 Pa or less. While the cell density does not need to be increased because the cell walls melt off due to the direct chemical reaction with the flue gas, it is possible to realize a reaction duct 50 capable of effectively performing flue gas treatment at a temperature of 300°C or higher to 1000°C based on the heat from the secondary burning in the first flue gas burning part 52, the tertiary burning in the second flue gas burning part 54, and the quaternary burning in the third flue gas burning part 56.

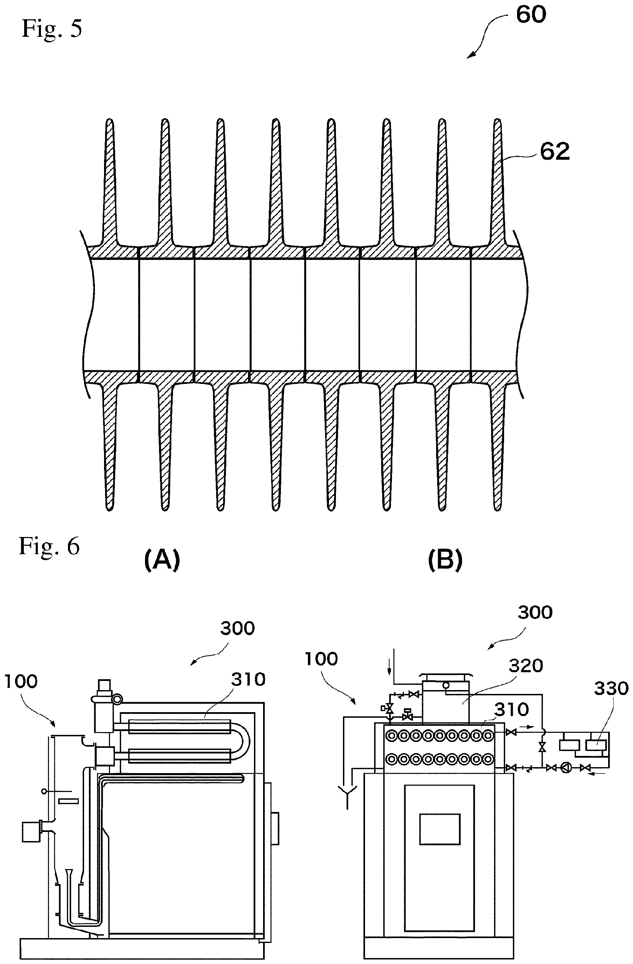

With the heat exchanger 60, a large amount of water vapor contained in the flue gas is condensed by exchanging heat with the heating medium, and condensation heat is thereby generated. The condensed water is collected. The heat exchanger 60 is configured, for instance, from a tubular heat exchanger, and a fin 62 may be provided as shown in Fig. 5 in order to increase the surface area. The flue gas temperature at the inlet of the heat exchanger 60 may be set, for example, to be 500 to 700°C or lower. The flue gas temperature of the outlet of the heat exchanger 60 may be set, for example, to be 200°C or lower. The condensed heat in the heat exchanger 60 moves within the heat exchanger 60 and is discharged outside. The heat exchanger 60 may be provided at the lateral part of the burning furnace 20, or at the upper part of the burning furnace 20. The heat exchanger 60 may be provided horizontally, or provided downward as it goes toward the air outlet 44. By providing the heat exchanger 60 downward as it goes toward the air outlet 44, the condensed water generated with the heat exchanger 60 can be reliably guided to the air outlet 44.

By condensing the water vapor contained in the flue gas and transferring the heat generated from such condensation to a liquid medium or a gas medium in the heat exchanger 60, the heat generated from the condensation can be effectively used, and the burning efficiency can thereby be improved. With a general boiler, the water vapor in the flue gas is not collected, and is exhausted. Moreover, because the heat of the flue gas is transferred to a liquid or gas heating medium through the heat exchanger 60, the temperature of the flue gas will decrease. Thus, it is possible suppress damage to the exhaust path such as a chimney. Moreover, because the water vapor has been condensed, the amount of water vapor contained in the flue gas will decrease, and the damage to the exhaust path caused by the water vapor can also be suppressed. Because the heat of the flue gas can be transferred to the outside heating medium with the heat exchanger 60, the temperature of the flue gas can be lowered. By rapidly cooling the flue gas which is 700°C at the inlet of the condensing unit configured from the heat exchanger 60 to be 200°C or lower in the condensing unit configured from the heat exchanger 60, it is possible to effectively prevent the recombination of the decomposed dioxins.

The burning apparatus 100 of a solid fuel may be provided with thermometers T1 to T8 for measuring the temperature of the respective locations. The thermometers can be configured from a temperature sensor such as a thermocouple. As the temperatures to be measured, for instance, considered may be the temperature near the ceiling of the burning furnace 20, the temperature near the discharge port 24 from which the flue gas is discharged from the burning furnace 20, the temperature near the second flue gas burning part 54, the temperature of the burner, and the temperature of the catalyst.

The burning in the burning furnace 20 is defined as "primary burning", the burning in the first flue gas burning part 52 is defined as "secondary burning", the burning in the second flue gas burning part 54 is defined as "tertiary burning", and the burning in the third flue gas burning part 56 is defined as "quaternary burning", and these terms will be used in this specification.

In this embodiment, the present inventors aimed to provide an automatic burning control system of a wood-based bulk fuel boiler that is easy to use for everyone, and consequently installed a total of eight temperature sensors T1 to T8 inside and outside of the device, and thereby provided a method of cleanly burning a wood-based bulk fuel, which is a solid fuel.

When a first opening 12, which is in communication with a passage of a heating medium, is provided at a part of the center of the ceiling of the housing, the first temperature sensor T1 is a sensor for measuring the temperature of the intake of the heating medium (for instance, heating air). The second temperature sensor T2, for instance, is a sensor for measuring the heating medium (for instance, heated air) heated immediately below the heat exchanger 60 provided between the housing covering the hot air passage as the space on the lateral face of the burning furnace 20. The third temperature sensor T3, for instance, is a sensor for measuring the temperature of the center part of the ceiling in the burning furnace 20. The fourth temperature sensor T4, for instance, is a sensor for measuring the temperature near the burner. The fifth temperature sensor T5 is a sensor for measuring the temperature immediately above the catalyst. The sixth temperature sensor T6 is a sensor for measuring the temperature of the discharge port 24 of the hot air blower 80. The seventh temperature sensor T7 is a sensor for measuring the temperature in a greenhouse to which the hot air is to be supplied. The eighth temperature sensor T8 is an outside air thermometer. By comparing the temperatures indicated with the thermometers of the first to eighth temperature sensors and their respective setup values, the automatic burning control of the burning furnace 20 for a wood-based bulk fuel can thereby be performed.

All heating values are controlled by increasing or decreasing the air supply rate decided based on the relation of the gas feeding device 40 and the exhaust device 42. By dealing with the deviation between the target hot air temperature and the hot air temperature through the opening/closing of the electromagnetic valve, the maximum tolerated burning capacity can be automatically controlled based on the ceiling temperature T3 in the furnace, the burner temperature T4, and the catalyst temperature T5.

In this embodiment, it is important to control the burning capacity in operating the burning furnace 20, and the heating value is the sum of all heating values from primary burning to quaternary burning, the latent heat of condensation in the heat exchanger 60, and the heating quantities of the flue gas. As a means for comprehending the burning capacity of the burning furnace 20, it was discovered that the primary burning heat of the burning furnace 20, the secondary burning heat of the reaction duct 50, the tertiary burning by a burner for auxiliary burning, the quaternary burning based on an oxidation catalyst, and the hot air temperature T2 obtained at a position designated immediately below the tubular heat exchanger in the flue that passes through the heat exchanger 60 can be used as the factors that represent the burning capacity.

The flue gas of a boiler that burns biomass needs to be cleaned as it contains ash dust and particulate PM 2.5, pitches, or dioxins. In this embodiment, explained is a method of obtaining a clean flue gas through a system of secondary burning (first flue gas burning part 52), tertiary burning (second flue gas burning part 54), and quaternary burning (third flue gas burning part 56) provided to the flue after primary burning (burning in the burning furnace 20).

When performing the operation of burning a wood-based bulk fuel in the burning furnace 20, an efficient method of use is preferred from the perspective of the user, and the following two methods are provided as the modes of use. One method is the batch method, wherein a large amount of fuel is placed at once in the burning furnace 20 in the full amount, and in a typical example after consuming fuel in five days of operation, new fuel is added upon lowering the furnace temperature, and the burning operation is resumed based on a one-week cycle. The second method is the reheat method, wherein the intended amount of fuel is placed in a furnace from the small door 32 or the automatic input port to perform the burning operation in accordance with the insufficiency of the fuel midway during the burning operation, the reheat fuel is newly added the following day, and the burning operation can be repeated in a daily cycle. The wood ash that is accumulated at the bottom of the furnace can be continuously used by being removed once every half year.

3. Control technology

With the burning furnace 20 that uses wood and wood-based bulk fuel and carbides as its fuel (hereinafter referred to as the "wood-based bulk fuel boiler"), unprocessed logs and tree stumps can be used as the least expensive fuel, but both the batch method and the reheat method may be used by using air-dried fuel that was dried in a natural environment, and the following basic burning control technology may be used for preventing environmental pollution caused by incomplete burning.

First, the basic structure of the wood-based bulk fuel boiler and the incidental burning control method are disclosed in foregoing Patent Document 4 by the present inventors. Nevertheless, because there are numerous issues in manually operating a bulk fuel boiler, a considerable level of proficiency was required. This is because the required burning control conditions are different due to influences of the burning temperature, the burning rate, and the flue gas resulting from differences in tree species such as sawthorn oak, cedar, larch, and bamboo and differences in the thickness, shape and moisture content (dryness) of the fuel. Thus, a considerable level of proficiency was required for manually performing the burning control of the furnace, and functions of the automatic operation control which can be easily operated by everyone are demanded.

When a bulk fuel, which is difficult to burn, is lit from a fuel capable of easily burning firewoods such as a wood-based bulk fuel, the range of burning will spread due to the flame which generates the flue gas. When there is a fuel at the part that is directly heated with the flame, the unburned part will be subject to the burning heat and the flame will further expand, but because the burning will head from the upper part to the lower part of the fuel as a characteristic of the bulk fuel boiler, the burning heat from the flame will heat and flame the peripheral fuel, the rise in the temperature of the fuel at the lower part will be minimal, and the temperature will rise slightly and drying will progress slightly. At the start of burning, initially hydrogen and lightweight hydrocarbons are burned pursuant to the flaming, subsequently live charcoal burning mainly occurs involving carbonized parts and charcoal fire, and finally wood ash will remain.

In order to burn a solid fuel such as wood-based bulk in a burning furnace, it would be better to understand this as a burning process which is in line with the characteristics of the burning state, and, by classifying the control of the respective processes into seven types of burning modes described below, it was discovered that it is possible to deal with all processes required for operating the furnace.

As the method of controlling the burning of the bulk wood-derived fuel, the modes can be classified into (1) initial mode in which the lighting of the fuel is required, (2) regular mode in which the fuel burns together with the flame, (3) live charcoal mode in which the carbides of the burning residue are burned, (4) dormant mode in which the burning is stopped and a source for making a fire is retained in the burnt wooden pile and wood ash, (5) re-burn mode of returning from the dormant state to the burning state, (6) reheat mode of adding fuel and extending the burning time, and (7) quench mode of extinguishing the fire, and the problem can be resolved by setting the burning control method suitable for the respective modes. As the system, (8) emergency safety measures may also be automated.

The initial mode refers to the process of lighting the fuel after performing the process of placing the fuel into the burning furnace and the process of inspecting the device. The lighting process is performed either automatically or manually, but for the sake of convenience the manual operation is explained as the basic operation. Generally speaking, because the bulk fuel to be placed in the furnace is often difficult-to-light fuel such as logs, driftwoods, lumber scraps, and tree stumps, easily burnable kindling material is placed at the front center of the top of the fuel. The bulk fuel can be reliably lit when cinder is used as the kindling material. A large amount of cinder can be obtained by quenching the furnace a little early without operating the furnace to the end and completely burning the bulk fuel and leaving only wood ash.

Between the process of inspection and the process of lighting, the large door of the furnace is opened, the auxiliary burner is lit, and the gas feeding device 40 (air supply fan) and its electromagnetic valve, and the exhaust device 42 (induction fan) are driven at the highest capacity. If there is no abnormality, lighting of the kindling is promoted, preheating of the reaction duct 50, the catalyst, the heat exchanger, the induction fan, and the chimney is promoted, and, after confirming that the fuel is ignited during an operation of roughly 15 minutes, the large door may be closed, and the mode may be switched to the regular mode of performing automatic burning.

In the initial mode, burner lighting and driving of the gas feeding device 40, the electromagnetic valve, and the induction fan are performed based on the respective setup values set with a programmable controller, and the confirmation of the fuel lighting and the process of closing the large door are performed based on manual operation.

In the regular mode in which the fuel burns together with the flame, because the burning state after the ignition of the fuel differs considerably depending on the differences in the tree species of the fuel and the fuel quality such as dryness, shape, and size, this is the part that automatic control is most difficult among all burning modes.

When the fuel is ignited and the mode is switched from the lighting mode to the regular mode, it is normal that the burning state considerably differs depending on the lighting state, and it is necessary to realize a calm burning state before switching to automatic control. Foremost, when the small door 32 is opened, it is possible to view a state where the furnace is filled with flue gas and the furnace pressure is of a negative pressure, and it is normal that the flue gas will not flow out from the small door 32. After the lapse of some time, it is possible to view a state where the flame is generated considerably with the air that is sucked in from the small door 32. Meanwhile, a state where the flue gas from the small door 32 flows out from the furnace corresponds to an excessive burning state, and it is necessary to immediately close the small door 32 and avoid the inflow of air, and decrease the aperture of the electromagnetic valve.

Foremost, in the regular mode of (2) above, for instance, it would be preferable to close the electromagnetic valve of the gas feeding device 40 to 30% to 60%, and more preferably 40% to 50%, and maintain it for 10 minutes to 60 minutes, and more desirably 30 minutes to 40 minutes, and the burning state is adjusted based on the differences in the fuel quality and the differences in the fuel ignition in the initial mode of (1) above. After the initial burning state is adjusted, performed is an automatic burning control method of maintaining the exhaust device 42 at 40 Hz to 50 Hz, maintaining the furnace pressure at a negative furnace pressure of -10 Pa or less, preferably within a range of less than -10 Pa to -1000 Pa or more, more preferably within a range of less than -10 Pa to -500 Pa or more, even more preferably within a range of -50 to -500 Pa, and most preferably within a range of -150 Pa to -300 Pa, and automatically adjusting the electromagnetic valve so that the generated hot air temperature T2 attains the setup value.

Because the adjustment of the burning capacity is performed by adjusting the electromagnetic valve against the deviation of the hot air temperature T2, and because the heat capacity of the overall burning furnace 20 is large and the fuel temperature increases pursuant to the burning and its own burning is promoted based on the oxygen discharged from the fuel as the characteristics of the wood-derived fuel boiler, there is a problem in that excessive burning tends to occur. In excessive burning, the hot air temperature T2, and consequently the hot air temperature T5, becomes higher than the setup value, and the catalyst temperature T4, and the temperature T3 in the burning furnace 20, will also increase. In addition to reducing the supply of oxygen from the feed valve before entering an excessive burning state or in order to promptly suppress the excessive burning state, it was discovered that it is possible to effectively quench the flame while suppressing the fuming by lowering the suction rate of the exhaust device 42 and increasing the furnace pressure that was a negative pressure.

Accordingly, in order to rapidly lower the combustibility from the excessive burning state, for instance, a moderate open/close rate for suppressing the fuming based on a rapid open/close operation of the electromagnetic valve is used, and an appropriate open/close rate is 1% to 10% per minute, more desirably 4% to 6%. It would be preferable to simultaneously lower the exhaust rate of the exhaust device 42, and lower the exhaustion rate from 35 Hz to 30 Hz, 25 Hz, and 20 Hz based on step operations. In the foregoing case, it was confirmed that, by setting the minimum limit obtained by subtracting the rotation of the exhaust device 42 by 0.5 Hz per minute by approximately 10 Hz, the excessive burning and the fuming can be suitably suppressed.

When the burning in the regular mode is continued, the hot air temperature T2 starts to rise, and normally the hot air temperature T5 also starts to rise a little later. The setup value of the hot air temperature T5 differs depending on the season and usage, but is normally set to 20°C to 60°C, and in particular, for the heating of plants and animals, the maximum temperature is normally set to 60°C as the heat resistant limit of the hot air blower (hot air fan) 80 and the plastic duct. In the foregoing case, the maximum heating capacity as the difference between the air intake temperature T1 and the hot air temperature T5 of the hot air output will be approximately $\Delta T$ to 50°C.

Because the thermal output is dependent on the hot air temperature T5 and the air flow, the air flow can be reduced when a high hot air temperature is required and the airflow can be increased when a low hot air temperature is required relative to a certain level of thermal output. While the hot air blower 80 can easily change the air flow mechanically because it is driven with an inverter, and, because the change in the air flow of the hot air blower 80 affects the stability of burning of the burning furnace 20; that is, impairs the thermally balanced state, the change of air flow should be limited to once every hour at most in order to maintain a stable burning state and thermal output.

Nevertheless, with use as a dryer or the like, a hot air temperature of 90 to 120°C is sometimes used. In the foregoing case, a hot air blower 80 having a heat resistance limit of 180°C or higher is used. Furthermore, the returned hot air of 50°C to 60°C of a high temperature that was used is introduced into the air intake and heated, and hot air of a temperature up to 100°C to 110°C is supplied, but the air flow is reduced to 50% or less in comparison to cases when the hot air temperature is 50°C.

When dried fuel (moisture content of approximately 20%) is used, the heating of the hot air temperature often reaches the setup value at roughly 2 hours after the fuel is ignited. With humid fuel (moisture content of 30% to 40%), while this also depends on the tree species and fuel quality, much time is often required for increasing the temperature of the burning furnace 20, and there are cases where 5 hours to 10 hours are required to sufficiently increase the hot air temperature T2. Nevertheless, once heating is performed, in the subsequent re-burn mode onward, heating and lowering of the temperature can normally be performed in roughly 1 hour. Moreover, with humid fuel, the amount of drain discharged from the heat exchanger may exceed a daily amount of 100 liters.

In the regular mode, gases, mainly lightweight hydrocarbons, are preferentially burned, and carbons as carbides are subsequently burned. Consequently, the regular mode switches to the live charcoal mode of burning carbides; that is, cinder-like black coal, that appear in the midst of the burning process, and the fuming will decrease. The switch from the regular mode to the live charcoal mode is not made suddenly, and the time period relative to the burning process is, approximately, regular mode 1/3, switching mode 1/3, and live charcoal mode 1/3.

In the live charcoal mode, because carbon components are mainly burned and the burning of hydrogen components will decrease, carbon dioxide will be generated, but oxygen in an amount that is double the amount of hydrogen components is required. An oxygen supply capacity that is approximately double the regular mode is required as an air supply capacity of the burning system, and, in order to obtain a heat quantity that is equivalent to the regular burning mode, it was discovered that this problem can be resolved by significantly increasing the feed rate of the gas feeding device 40; that is, normally 1.5 to 2 times the normal feed rate.

In the live charcoal mode, while the generation of ash dust and flue gas is small because the generation of hydrocarbons is small, the concentration of carbon monoxide will increase. Nevertheless, when the catalyst temperature is approximately 500°C or higher, it was discovered that the lighting of the auxiliary burner for cleansing the exhaust gas is not necessarily required. Moreover, when a large heat quantity is generated to burn the black coal, the temperature in the burning furnace 20 will increase, and the peripheral ash dust and pitches are also completely burned.

When the air supply into the burning furnace 20 is stopped midway during the live charcoal burning, cinder-like black coal is obtained. It was discovered that black coal and bamboo charcoal can be obtained by placing carbonizing fuel at the bottom of the burning furnace 20, placing fuel to be burned at the upper part thereof and burning the fuel, and quenching the fire at the proper timing.

The operation of the burning furnace 20 involves various modes such as continuous operation and temporary suspension. When heating is used 24/7 as with dryers or in cold regions, there are cases where it is necessary to cause the burning to be temporarily dormant and then resume the heating when required depending on usage such as when heating factories, meeting rooms, and offices during the day and heating protected agriculture, barns, and factories during the night. In other words, there are demands for temporarily stopping the burning furnace 20 that is burning fuel and causing it to become dormant according to a program, and thereafter resuming the burning process according to a program at the desired time.

While it is possible to switch to the dormant mode at the programmed time during the operation of the regular burning mode or the live charcoal burning mode, in order to switch to the dormant mode, it is necessary to adjust the air supply electromagnetic valve to be 1% to 10%, preferably 3% to approximately 7%. Moreover, by lowering the rate of the exhaust device 42 in accordance with the air supply rate, the air supply rate can be considerably reduced, and live coal can be retained in the burnt wooden pile of ember or in the charcoal fire buried in the wood ash. While the lighting of the burner is stopped after switching to the dormant mode, the burner fan for preventing the contamination of the nozzle part will continue to be operated.

Because the amount of live coal depends on the aperture of the electromagnetic valve and the burning state, measures such as adjusting the rise time during the re-burn are taken as needed. When the aperture is small in a dormant state, while the consumption of dormant fuel is small, the rise time during the re-burn will be long.

In the re-burn mode of returning from the dormant state to the burning state, the fuel can be re-burned at the programmed time to increase the thermal output of the burning furnace 20. In the re-burn mode, while a rapid rise of the heating power is required, the fuel is rather dry because it has just undergone the burning operation, and ignition and temperature rise are facilitated.

The reheat mode which, unlike the batch operation, continuously operates the burning furnace 20 while adding fuel can be used. When fuel consumption increases and heat quantity becomes insufficient, because the hot air temperature T2 will not rise even when the air supply rate is increased to 100%, the mode is switched to the reheat mode or the quench mode after detecting the fuel shortage. After switching to the reheat mode for extending the burning time, the reheat fuel can be added.

With regard to the added amount of fuel, while fuel is continuously added without interruption in the general burning method, a wooden bulk fuel furnace is unique in that the added amount; that is, the reheat amount, can be set in daily units. While the reheat amount is dependent on the quality of the fuel to be used, it is possible to comprehend one day worth of fuel from the fuel that is being used. As the reheat amount, generally speaking, a fuel amount that is 1/5 to 1/7 of the batch amount is placed into the burning furnace 20 from the small door 32 or the automatic input port.

Upon performing heating, it is crucial to comprehend the burning state in the burning furnace 20. In either the normal burning mode which involves flames and fuming, or the live charcoal burning mode, because excessive burning tends to occur when the reheat fuel is placed into the burning furnace 20 when its heating power is high, it is necessary to set the time program so that the reheat fuel is placed into the burning furnace 20 after staying in the dormant mode for approximately 30 minutes and the heating power subsides. By automatically switching to the normal mode after the fuel is added, the fuel can be burned at a proper rate.

In order to stop the burning furnace 20, in all burning modes, the mode is switched to the quench mode manually or at the programmed time, and the electromagnetic valve is gradually decreased from its used state to 0%. Furthermore, the rotation rate of the induction fan is simultaneously lowered by approximately 10 Hz, and the fire in the burning furnace 20 is thereafter completely quenched. While it is difficult with a boiler having a large heat capacity, there are demands for rapidly cooling the heated burning furnace 20.

With the burning apparatus 100 of this embodiment, because the overall burning furnace 20 can be cooled by operating the hot air blower 80, the hot air blower 80 is driven at 50 Hz to 60 Hz for 2 hours to 4 hours, and more desirably for approximately 3 hours, to cause the hot air temperature T2 to be approximately 25°C or lower (when the outside air temperature is 10°C), and can be subsequently stopped.

The control conditions and control method for each burning mode in the burning control explained above can be realized by using electronic control equipment for use in a factory automation system. As the primary electric equipment for automatic control, used are a serial communication unit in which a burning control software program is equipped in a sophisticated programmable controller and which connects to the operating equipment at high speed, and an analog output unit and a temperature sensor unit which need to be used for different purposes in the control equipment. Furthermore, confirmation of the operational state and the control state can be displayed on a touch panel based on the foregoing operations of the control system.

An example of the characteristics points in this burning control is listed below.

(i) In order to suppress the fuming that is generated pursuant to the opening/closing of the air supply electromagnetic valve for adjusting the burning capacity, the conditions for slowing the open/close rate of the electromagnetic valve were discovered to enable the use of a proper open/close rate.

The air flow or the rotation rate of the exhaust device 42 for adjusting the flue gas volume and the hot air blower 80 for adjusting the supplied heat quantity is dealt with by automatically adjusting the heating value, hot air temperature, and air flow based on inverter control, and the mixing damper 14 mixes the incorporated outside air T1 and the hot air T2 with an electronic switch to obtain the intended hot air temperature T6.

(ii) By discovering the operation method and control conditions which enable automatic operation in each burning mode, a method which enables automatic control is provided. In the initial mode, preheating of the flue by the burning means (auxiliary burner or the like) in the second flue gas burning part 54, method of igniting the furnace fuel, and operating conditions and timing of the exhaust device 42 are specified, and the operating conditions of the exhaust device 42 which will lead to the stabilization of the burning state required for switching to the regular mode after closing the large door of the furnace subsequent to fuel ignition are specified. In the regular mode, because the burning state in the furnace will differ considerably due to the differences in the fuel quality and the differences in the fuel ignited state of the initial mode, by adjusting the burning state to be a constant state to enable automatic operation, the control system can thereby be automatically operated. In order to realize the above, it would be preferable to close the electromagnetic valve of the gas feeding device 40 to 30% to 60%, and more preferably 40% to 50%, and maintain it for 10 minutes to 60 minutes, and more desirably 30 minutes to 40 minutes, and the burning state is adjusted based on the differences in the fuel quality and the differences in the fuel ignition in the initial mode of (1) above.

(iii) After the initial burning state is adjusted as described above, performed is an automatic burning control method of maintaining the exhaust device 42 at 40 Hz to 50 Hz, maintaining the furnace pressure at a negative furnace pressure of -10 Pa or less, preferably within a range of less than -10 Pa to -1000 Pa or more, more preferably within a range of less than -10 Pa to -500 Pa or more, even more preferably within a range of -50 to -500 Pa, and most preferably within a range of -150 Pa to -300 Pa, and automatically adjusting the electromagnetic valve so that the generated hot air temperature T2 attains the setup value. Nevertheless, there may still be cases where excessive burning occurs in which the upper limit temperature of the furnace temperature T3 is reached in primary burning or the upper limit temperature T5 of the catalyst is reached in quaternary burning due to differences in the fuel quality or differences in the inserted state of fuel in the furnace, or other factors.

While the aperture of the electromagnetic valve is reduced to a proper open/close rate in order to suppress excessive burning, because sudden opening/closing will increase fuming, a moderate open/close rate is required, and an appropriate open/close rate is 1% to 10% per minute, more desirably 4% to 6%. When excessive burning cannot be suppressed with the opening/closing of the feed valve, it was discovered that increasing the furnace pressure is effective for suppressing the burning. In order to realize the above, because it was confirmed that, by setting the minimum limit obtained by subtracting the rotation of the exhaust device 42 by 0.5 Hz per minute by approximately 10 Hz, the excessive burning and the fuming can be suitably suppressed, control of the furnace pressure is used in parallel.

In the live charcoal mode, because carbides and charcoal are mainly burned, carbon components are mainly burned and the burning of hydrogen components will decrease and, while fuming is limited, a large amount of oxygen is required. Thus, the air supply rate of the electromagnetic valve needed to have an air supply capacity that is 1.5 to 2 times in comparison to the regular mode. Moreover, in the live charcoal mode, because charcoal fire is burned and the temperature in the furnace tends to increase, heat resistance of the furnace was required. Consequently, contamination of flue gas and pitches in the furnace or accumulated in the flue is completely burned and cleaned, and, in the live charcoal mode, the burning of coals under the same burning conditions as charcoal is enabled.

In the dormant mode, it was discovered that the air supply rate can be considerably reduced, and live coal can be retained in the burnt wooden pile of ember or in the charcoal fire buried in the wood ash, by adjusting the air supply electromagnetic valve to be 1% to 10%, preferably 3% to approximately 7% at the programmed time. Moreover, this live coal can be maintained for several days while there is fuel, and re-burned at the intended time as needed.

In the re-burn mode, the dormant mode is cancelled and switched to the regular mode at the programmed time, and the fuel is re-burned, and, when the amount of live coal is appropriate, the time required for the re-burning is 1 to 2 hours.

In the reheat mode, when consumption of the fuel advances and the heating value decreases, sufficient reheat fuel is added and the heating capacity is maintained. In order to safely operate the reheat mode, foremost, the control system is switched to the dormant mode, and, after the heating power subsides after the lapse of 20 minutes to 40 minutes, preferably after the lapse of approximately 30 minutes, additional fuel is placed into the furnace from the small door 32 or the automatic input port, and the dormant mode is subsequently switched to the re-burn mode.

As the reheat amount, the amount of fuel that can be added at once needs to be limited in order to maintain stable burning. In the foregoing case, the source for making a fire is the lower part of the added reheat fuel, and the burning capacity needs to be 10 hours' worth or 1 day worth or less in order to avoid a large amount of fuel being burned at once, and this can be operated in the regular mode.

To switch to the quench mode, in all burning modes, the electromagnetic valve is gradually decreased from its used state to 0% manually or at the programmed time, and the rate of the exhaust device 42 is simultaneously lowered by approximately 10 Hz, and the fire in the furnace is thereafter completely quenched. Nevertheless, in order to promote the cooling of the heated furnace, the hot air blower 80 is driven at 50 Hz to 60 Hz for 2 hours to 4 hours, and more desirably for approximately 3 hours, and can be subsequently stopped after the temperature of the furnace has decreased.

(iv) In the burning flue gas of a wood-derived fuel, hydrocarbons, carbon-based ash dust, carbon monoxide, pitches, dioxins, other acidic gases, and odor coexist together the high temperature water vapor, and it is necessary to oxidize these flue gas components and convert them into carbon dioxide $CO_2$ or water vapor $H_2O$. In order to realize the above, a heat-resistant catalyst material capable of powerfully oxidizing the flue gas was searched, and attention was given to complex metal oxides of a part of the CaO system and the MgO system as strongly basic alkali earths.

(v) In the burning furnace 20 which burns a solid fuel such as wood-based bulk, provided are the operation leveraging its characteristics and the method of using the same. The following two methods are provided as the modes of use; specifically, one method is the batch method, wherein a large amount of fuel is placed at once in the burning furnace 20 in the full amount, and, after fuel is consumed, the large door of the furnace is opened and new fuel is added upon resuming the burning operation, and the other method is the reheat method, wherein approximately 1-day worth of fuel is placed in a furnace from the furnace opening or the automatic input port to perform the burning operation in accordance with the insufficiency of the fuel midway during the burning operation, 1-day worth of fuel is added the following day, and the burning operation can be repeated in a daily cycle. The wood ash that is accumulated at the bottom of the furnace can be continuously used by being removed after a long period of use.

4. Effects

(i) Among familiar fuels including gas fuels such as natural gas, city gas, and propane; liquid fuels such as gasoline, light oils, and heavy oils; and solid fuels such as biomass and coal, it is not easy to clean the flue gas in the burning of biomass and coal as solid fuels. In recent years, while the use of pellet boilers and chip boilers are becoming widespread as a wooden biomass boiler, measures against ash dust generation and dioxin generation are insufficient.

According to this embodiment, it is possible to obtain clean flue gas based on the low temperature burning method of solid fuels and the purification method of flue gas. According to this embodiment, the ash dust amount is approximately 1/50 of the ash dust amount of a representative pellet boiler, and it is possible to considerably contribute to measures for dealing with PM 2.5. In biomass burning, the generation of dioxins cannot be ignored in many cases, but in this embodiment it is possible to suppress the generation of dioxins.

(ii) According to this embodiment, it is possible to burn naturally dried logs. Thus, processing energy for burning the fuel is not required. Meanwhile, in the case of pellets, a considerable amount of energy is required for processing the logs into pellets.

(iii) According to this embodiment, when the fuel is wood-derived fuel, such fuel can be burned when the moisture content is 40% or less, preferably 30% or less. Note that, even with recently cut wood having a high moisture content, such wood can be burned so as long as it is used as a part of the fuel. Generally speaking, it is said that the moisture content of firewoods of a firewood boiler is roughly 20%, and in the case of pellets roughly 10%.

(iv) According to this embodiment, because water vapor in the flue gas is condensed and the condensation heat generated from such condensation is used, the burning efficiency can be improved to be 90% or higher.

(v) Generally speaking, while an exhaust fan for discharging flue gas from the burning furnace 20 is often provided, previously there was no concept of using such exhaust fan to control the pressure in the burning furnace 20 to be a negative pressure and using a low burning temperature.

While there was a concept of controlling the burning, based on the flow rate of air, in the burning apparatus 100 which burns pellets and firewoods, previously there was no concept of gradually burning the fuel. According to this embodiment, burning control can be performed so as to gradually burn the solid fuel.

(vi) Because a platinum-based catalyst is not used, the temperature in the catalytic part can be a high temperature. With a platinum-based catalyst, because the platinum becomes oxidized or vaporized at a temperature of 300°C or higher, it is difficult to use a platinum-based catalyst for a long period at 300°C or higher. Nevertheless, according to this embodiment, because an oxidized metal-based ceramic catalyst is used, it can be used easily for a long period even at 400 to 1000°C.

(vii) According to this embodiment, the incompletely burned flue gas generated in the burning furnace 20 can be completely burned reliably in the duct, and the amount of ash dust can thereby be reduced. Moreover, it is also possible to avoid the problem of backfire caused by the incomplete burning. Thus, there is no need to install an explosion proof valve.

(viii) According to this embodiment, it is possible to apply an automatic burning control method that can be used by everyone to a furnace capable of burning, at a high thermal efficiency, wood-based bulk fuels and carbide fuels least expensively by using the foregoing boiler. It is thereby possible to facilitate the use of a clean burning system capable of suppressing the generation of ash dust and dioxins, and there is an advantage in that the operation based on the batch method or the reheat method can be used easily, and use as a thermal energy source in substitute for oil-based fuel boilers which use fossil fuel and gas fuel boilers is anticipated.

Because the least expensive wood-based bulk fuel can be effectively used, the demand and supply of wood-based fuel will increase, and this will contribute to the promotion of management, recycling and employment in relation to forests, as well as contribute to the suppression of air pollution caused by flue gas, purification of the environment, and prevention of global warming as green energy. Furthermore, the use of the foregoing boiler in the heating of various sectors such as factories, driers, protected horticulture, stockbreeding, and convention facilities is anticipated.

(ix) According to this embodiment, an effect is yielded in that the burning furnace 20, which is capable of burning, based on the least expensive method and at a high thermal efficiency, solid fuels such as wood-based bulk fuel and fuels containing carbides and coals, can be used by everyone. All types of wood-based bulk fuels can be effectively used, and it is possible to contribute to the purification of the environment and prevention of global warming as green energy, increase the supply and demand of fuels, and promote management and employment related to forest resources.

5. Gas heating apparatus

The gas heating apparatus 200 can be realized by using the burning apparatus 100 of a solid fuel according to the foregoing embodiment. For example, outside air can be incorporated from a first opening 12 in communication with a hot air passage provided at a part of the center of the ceiling of the housing, or ventilation air can be heat-exchanged with the outer wall of the burning furnace 20, the heat exchanger 60, and the outer wall of the reaction duct 50 to generate hot air. Because a passage for incorporating such hot air into the hot air blower 80 is provided and the temperature of the hot air incorporated into the hot air blower 80 is caused to be a predetermined hot air temperature, the predetermined hot air temperature can be realized based on a mixing mechanism of opening/closing a second opening 14 in communication with a hot air path provided at a part of the housing 10 and incorporating the outside air. It is thereby possible to discharge hot air of a predetermined temperature from the hot air blower 80. Note that, when air is incorporated from the first opening 12, a guide plate (not shown) may be provided on either side between the body 10 and the burning furnace 20 so that such air comes into contact with the reaction duct 50.

The gas heating apparatus 200 comprises a gas feeding device 40 and an exhaust device 42 which adjust the internal pressure of the burning furnace 20 and the flue gas flow rate in the flue, a mixing damper 14 which incorporates the outside air and adjusts the hot air temperature, and a hot air blower (hot air fan or the like) 80 for adjusting the hot air feed rate. The hot air blower 80 may be controlled based on inverter control. The mixing damper 14 may use an electronic switch or a fan for incorporating outside air of a low temperature.

More specifically, with the gas heating apparatus 200, for instance, the outside air incorporated from the top of the burning furnace 20 can be halved with a damper provided between the ceiling of the furnace and the outer wall at the top of the furnace. A part of the outside air is heated at the outer peripheral part of the burning furnace 20 and the heat exchanger 60 and becomes hot air, and the other part of the outside air is heated at the outer peripheral part of the reaction duct 50 and the heat exchange and becomes hot air. The foregoing hot air is mixed with the outside air from the outside air intake damper 14 and becomes hot air of a proper temperature, and then discharged from the hot air blower 80.

With this gas heating apparatus 200, as a burning system that is suitable for environmental measures, adopted is a clean burning system including primary burning of burning fuel in a furnace of a negative pressure at a low temperature, secondary burning of cleansing the flue gas, tertiary burning based on auxiliary fuel, and quarternary burning based on a powerful oxidation catalyst.

6. Liquid heating apparatus

The burning apparatus 100 of a solid fuel according to this embodiment can also be applied to a liquid heating apparatus 300. Liquid (water or the like) can be incorporated from a first opening 12 of a housing 10, and the liquid can be circulated within the body 10 so that the liquid is heat-exchanged with the outer wall of the burning furnace 20, the heat exchanger 60, and the outer wall of the reaction duct 50 and thereby heated. While the liquid can be introduced into the body 10 through a pipe line, a first opening 12 or an inlet for introducing the pipe line into the body 10 may also be provided at the top face or lateral face of the body 10. The heated liquid may be discharged outside with a pump or the like, and the heated liquid may be used for some kind of purpose, or heat may be discharged from the heat radiator for heating some kind of object such as a heating medium.

As one specific example, as shown in Fig. 6, a tank 310 may be provided on the burning furnace 20, and the heat of the burning furnace may directly heat the liquid in the tank, and a heat exchanger 60 through which flue gas passes may be provided within the tank 310, and the heat of the flue gas can be used to heat the heating medium (liquid) based on the heat exchanger 60. A cistern 320 may be connected to the tank 310. When the temperature of water increases and the pressure of the liquid in the tank 310 increases, the liquid is transferred to the cistern 320 until the pressure in the tank 310 becomes a normal pressure. When the pressure of the liquid falls below a normal pressure, the liquid is returned from the cistern 320 to the tank 310, and the water in the tank 310 is supplied until it becomes a normal pressure. Moreover, the heated liquid may be discharged from the tank 310 or the liquid may be supplied to the hot water tank as needed.

7. Power generation system

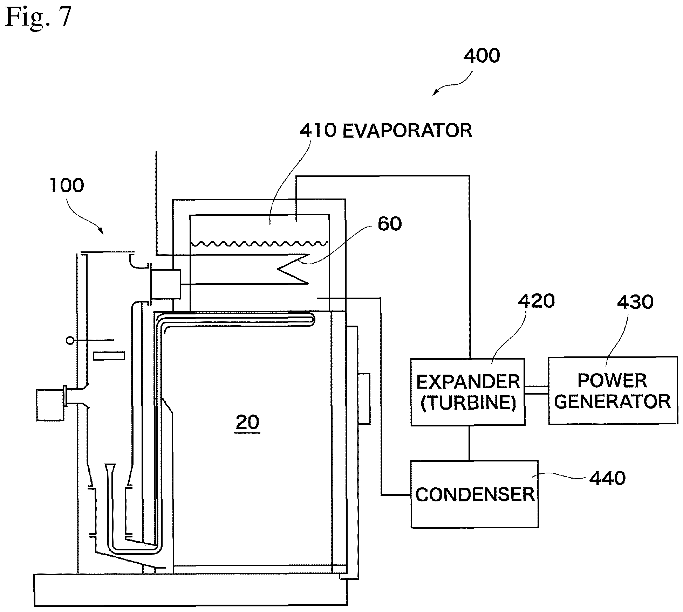

A power generation system 400 using the burning apparatus 100 of a solid fuel according to this embodiment is now explained with reference to Fig. 7. In the power generation system 400, the flue of the flue gas is configured so that the heat exchanger 60 passes through the evaporator 410. A liquid heating medium (water, for instance) is stored in the evaporator 410. Heat of the flue gas is transferred to the liquid heating medium by the heat exchanger 60. The evaporator 410 may be provided, for instance, above the burning furnace 20. It is thereby possible to transfer the heat of the burning furnace 20 to the liquid heating medium in the evaporator 410 through the top face of the burning furnace 20.

As a result of the heat of the flue gas being transferred to the liquid heating medium by the heat exchanger 60, the liquid heating medium will evaporate. The gas heating medium is supplied to the expander 420 as a turbine, the energy of the gas heating medium is converted into rotational energy by the expander 420, and power is thereby generated by the power generator 430. The heating medium discharged from the expander 420 is condensed into liquid by the condenser 440, and the condensed liquid heating medium is returned inside the evaporator 60. As the expander 420, for instance, a semi-hermetically sealed screw turbine-type power generator in which a screw turbine and a power generator are configured in a uniaxial integrated structure may be used.

8. Cooling system

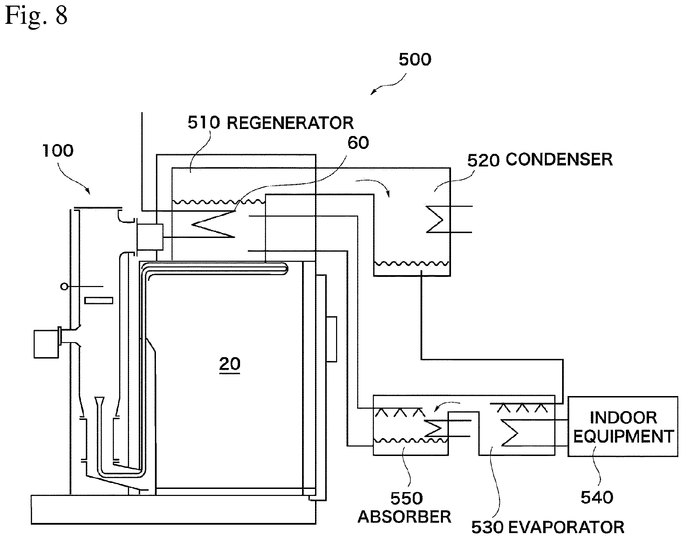

A cooling system 500 using the burning apparatus 100 of a solid fuel according to this embodiment is now explained with reference to Fig. 8. In the cooling system 500, the flue of the flue gas is configured so that the heat exchanger 60 passes through the regenerator 510. A liquid heating medium (water, for instance) is stored in the regenerator 510. Heat of the flue gas is transferred to the liquid heating medium by the heat exchanger 60. The regenerator 510 may be provided, for instance, above the burning furnace 20. It is thereby possible to transfer the heat of the burning furnace 20 to the liquid in the regenerator 510 through the top face of the burning furnace 20.

In the regenerator 510, the first heating medium (water, for instance) exists in a state of being incorporated into a solution (for instance, lithium bromide-water solution) for absorbing the first heating medium. Heat of the flue gas is transferred to the first heating medium (water, for instance) by the heat exchanger 60, and the first heating medium will evaporate. The first heating medium is condensed in the condenser 520. The condensed first heating medium is supplied to the evaporator 530 of a reduced pressure, and then evaporated in the evaporator 530. Here, the first heating medium absorbs the evaporation heat from a second heating medium circulating in the indoor equipment based on the heat exchanger. The cooled second heating medium is supplied to the indoor equipment 540. The first heating medium is absorbed by the solution which absorbs the first heating medium in the absorber 550. The solution that absorbs the second heating medium is returned to the regenerator 510 using a pump or the like.

[Example 1]

Examples of the present invention are now explained.

As the burning apparatus of a solid fuel according to this Example, the two types of a burning apparatus A and a burning apparatus B were manufactured, and the automatic burning control function was verified.

The important factors in burning control are the structure, burning function, and control function of the burning furnace, and these are indicated as the size of burning furnace, capacity of the gas feeding device and the exhaust device, and the hot air blower shown in Table 2.

[Table 2]

| Capacity and size of burning furnace, driving power of fans, and auxiliary burner | | |
|---|---|---|
| Burning furnace name | A | B |
| Burning furnace (m3) (L× W× H) | 2 1.3×1.0×1.9 | 4 1.7×1.4×1.8 |
| Gas feeding device (W) | 60 | 160 |
| Exhaust device (W) | 160 | 160 |
| Hot air blower (kW) | 0.90 | 1.9 |
| Auxiliary kerosene burner (L/h) (second flue gas burning part) | 1.5 | 1.5 |

Because the size of the burning furnace will directly limit the amount of batch-type fuel that can be directly placed in the furnace, it is an important factor depending on the usage. Fuel is placed in a burning furnace of 2 m³ in the burning apparatus A and fuel is placed in a burning furnace of 4 m³ in the burning apparatus B, but the amount of fuel that can be placed in the burning furnace differs considerably depending on the shape of the fuel. Even if fuel is placed in the burning furnace by minimizing the space between large and small logs, the amount of fuel that can be placed in the burning apparatus A is, at most, 1 t, and the amount of fuel that can be placed in the burning apparatus B is roughly 2 t.

When these fuels are burned for 1 week, their consumption will be respectively 140 kg or 280 kg per day. With regard to the heating values based on these fuels, while there are considerable differences between low-order heating values obtained by reducing the heat quantity which heats and evaporates moisture corresponding to the moisture content and high-order heating values based on bone-dry fuels, it is said that, with unprocessed wood, the high-order heating values of both north-sea lumber and south-sea lumber are the same at 5,000 kcal/kg. Accordingly, the foregoing burning apparatuses A and B generate thermal energy of 790 kWh and 1580 kWh per day, respectively. While it is difficult to specifically comprehend the heating values, if the burning operation of the burning furnace is 10 hours per day, the heating value per hour corresponds to 79 kWh/h or 158 kWh/h.

Burning; that is, the heating value is closely related to the amount of air that is fed by the gas feeding device, and, while the blast capacity depends on the structure and performance of the fan, under current circumstances in which relevant technologies have matured, it could be said that their functions are in proportion to the size of the approximate power consumption. Table 2 shows the power consumption as the method of simplifying the functions of fans.

In the burning furnace, flue gas is generated due to the incomplete burning of the primary burning, and, while the unburned components are further burned in the secondary burning, the burning is further promoted with the auxiliary burner. The auxiliary burner can use kerosene as one type of fossil fuel, or gases. Otherwise, while an electric heater can be used as a simple method, kerosene can be used from the perspective of cost-benefit performance. When a burner of 1.5 L is used as the kerosene charge per hour, the heating value corresponds to 15.3 kWh/h. Accordingly, because the heating value of the burning furnace becomes the sum of the heating value of the wood-derived fuel and the heating value of the burner, with the burning furnace of the burning apparatus A and the burning furnace of the burning apparatus B, 18.8% and 10.4% as their entire heating values become the burner heat quantities, respectively. In this Example, the burning furnace of the burning apparatus A and the burning furnace of the burning apparatus B are used, and, as explained in the foregoing embodiment, by classifying the modes into (1) initial mode in which the lighting of the fuel is required, (2) regular mode in which the fuel burns together with the flame, (3) live charcoal mode in which the carbides of the burning residue are burned, (4) dormant mode in which the burning is stopped and a source for making a fire is retained in the burnt wooden pile and wood ash, (5) re-burn mode of returning from the dormant state to the burning state, (6) reheat mode of adding fuel to the burning furnace and extending the burning time, and (7) quench mode of extinguishing the fire, the control conditions for each specified burning mode were realized by using the electronic control equipment for use in a factory automation system.

In other words, the automatic burning operation of the burning furnace of the wood-based bulk solid fuel was performed by adjusting the air supply rate with an electromagnetic valve of the gas feeding device, adjusting the internal pressure of the burning furnace and the flow rate of the flue by changing the fan speed of the exhaust device, adjusting the opening of the mixing damper, and adjusting the hot air feed rate of the hot air blower based on the setup value of the thermometer output which is suitable for the respective modes.

As the primary electric equipment for automatic control, used were a serial communication unit in which a control software program for each burning mode is equipped in the programmable controller PLC and which connects to the operating equipment at high speed, and an analog output unit and a temperature sensor unit which need to be used for different purposes in the control equipment. Furthermore, confirmation of the operational state and the control state were displayed on a touch panel based on the foregoing operations of the control system.

By using the FA communication software for connecting the programmable control unit PLC and the personal computer PC, it was possible to facilitate data processing, data display and communication connection with the WEB using the personal computer PC. Furthermore, transmission of the correction and warning of the control program was enabled through the communication connection.

The flue gas discharged from the chimney of the testing facility of the gas heating apparatus was analyzed, and the analytical results shown in Table 3 were obtained.

[Table 3]

| Flue gas analytical value of wooden biomass boiler | | | |
|---|---|---|---|
| Name of testing facility | Wooden biomass boiler (A & B) | | |
| Configuration of facility | Heat transfer area 1.736 m$^2$ | Burning capacity 17 L/h (in terms of A heavy oils) | Chimney 0.159 m$\varphi$ × 4.65 mH |
| Regular operation | Pre-cut laminated scraps were used as the fuel | | |
| Measurement item | Unit of measure | Measured value | Emission standard prescribed by government (1982.6.1.) |
| Soot and dust | g/m$^3$ | <0.01 | <0.20 |
| Sulfur oxide | Mg/Nm$^3$ | <0.01 | 0.115 |
| Nitrogen oxide | ppm | 49 | 350 |
| Hydrogen chloride | Mg/Nm$^3$ | <3 | 700 |
| Dioxins | Ng-TEQ/Nm$^3$ | 0.32 | 5 |

From the results of the flue gas analysis, the average temperature of the exhaust gas was 70°C, and the amount of ash dust that was generated and the amount of dioxins that was discharged were 1/10 or less in comparison to the discharge standard.

With a standard wooden biomass boiler (burning furnace of the burning apparatus B of Table 2), because 2 tons of firewood fuel is consumed per batch, a heat quantity of an average of 9,600,000 kcal/batch is generated. In terms of oil fuel, this corresponds to 1056 liters of heat quantity. When four batches of fuel are consumed in one month, the corresponding boiler is able to substitute petroleum fuel of 4.2 $m^3$ in one month. Moreover, because the oil heat quantity for an auxiliary fuel is 10% or less, with the hot air generation of the present invention, 90% or more of petroleum thermal energy can be substituted with wooden bulk fuel.

The cost of construction mill ends, sawmill mill ends, thinned woods, agricultural wood waste, construction wood waste, charcoal, carbides and coal used as the wooden biomass fuel will considerably differ depending on the quality and supply state thereof, but is, on average, ¥5/kg. While the range of cost of light oils, A heavy oils, waste oils, and bio-based oils as oil fuels is broad, because it is anticipated to be ¥50 to 100/kg/liter in the future, it is assumed that fuel costs can be reduced to 5% to 10% of the oil system, and the economic effect will be dramatically higher.

Moreover, a wooden biomass boiler is a recycling-oriented carbon dioxide zero emission system, and, when fossil fuel and its devices are replaced, 90% or more of the discharged greenhouse gases can be reduced in consideration of the amount of fossil fuel as the auxiliary fuel. The emission rights of greenhouse gases can be used for further reducing the fuel costs, and the fuel consumption of the wood-based bulk fuel boiler can be suppressed boundlessly in the future based on the present invention.

In this embodiment, various modifications are possible within the scope of the present invention. For example, the shape or main fuel of the burning furnace or the placement of the flue path or hot air path or the basic structure as the burning furnace such as the packing structure of the door may be suitably selected. Moreover, in the foregoing embodiment, while the burning example of the wood-based bulk combustibles was explained, this embodiment can also be applied to the burning of other solid fuels.

[Industrial Applicability]

The present invention can be broadly applied as a burning apparatus of solid fuels such as woods, carbides, or bio-based bulk combustibles.

[Description of Reference Numerals]

10 body
12 first opening
14 second opening
16 fuel adding port
20 burning furnace
22 fuel supply port
24 discharge port
26 inside flue
28 partition plate
30 door
32 small door
34 handle
36 sealing member
38 hinge
40 gas feeding device
42 exhaust device
44 air outlet
46 control device
50 reaction duct
52 first flue gas burning part
54 second flue gas burning part
56 third flue gas burning part
60 heat exchanger
62 fin
70 oxygen supply path
72 through hole
74 tip of oxygen supply path

80 hot air blower
100 burning apparatus
200 gas heating apparatus
300 liquid heating apparatus
310 tank
320 cistern
330 heat radiator
400 power generation system
410 evaporator
420 expander
430 power generator
440 condenser
500 cooling system
510 regenerator
520 condenser
530 evaporator
540 indoor equipment
550 absorber

**Claims**

1. A burning apparatus of a solid fuel, comprising:

   a burning furnace which burns the solid fuel;
   a gas feeding device which feeds a gas containing oxygen to the burning furnace; and
   an exhaust device which exhausts a flue gas discharged from a discharge port of the burning furnace,
   wherein the burning apparatus further comprises a control unit which simultaneously controls the gas feeding device and the exhaust device and thereby controls a furnace pressure of the burning furnace.

2. The burning apparatus of a solid fuel according to claim 1,
   wherein the control unit additionally controls a burning capacity of the burning furnace by controlling the gas feeding device and the exhaust device.

3. The burning apparatus of a solid fuel according to claim 1 or claim 2,
   wherein the control unit additionally controls a flue gas temperature in the discharge port of the burning furnace to be 500°C or lower by controlling the gas feeding device and the exhaust device.

4. The burning apparatus of a solid fuel according to claim 1 or claim 2,
   wherein the control unit additionally controls a level of an oxidizing atmosphere of the burning furnace by controlling the gas feeding device and the exhaust device.

5. The burning apparatus of a solid fuel according to claim 1 or claim 2,
   wherein, while the solid fuel is being burned in the burning furnace, the control unit controls the furnace pressure of the burning furnace to be a negative pressure of -10 Pa or less.

6. The burning apparatus of a solid fuel according to claim 1 or claim 2, further comprising:

   a supply port provided to the burning furnace for supplying the solid fuel; and
   a door provided for blocking the supply port,
   wherein a sealing member for preventing infiltration of outside gas is provided at least to a part of a periphery of the supply port and at a part where pressing force is applied by the door, and
   wherein the sealing member is configured by containing glass fiber, ceramic fiber or carbon fiber as its primary component.

7. The burning apparatus of a solid fuel according to claim 1 or claim 2,
   wherein a condensing unit which condenses water vapor contained in a flue gas discharged from the burning furnace is provided between the burning furnace and the exhaust device, and

wherein the condensing unit is configured from a heat exchanger for converting heat generated from condensation of the water vapor into a liquid medium or a gas medium.

8. The burning apparatus of a solid fuel according to claim 1 or claim 2, further comprising:

an exhaust path for exhausting a flue gas provided between the discharge port of the burning furnace and the exhaust device;
an oxygen supply path for supplying a gas containing oxygen which is connected to the exhaust path; and
an ignition unit provided to the exhaust path,
wherein the flue gas is mixed with a gas containing oxygen supplied from the oxygen supply path, and burned with fire induced by the ignition unit.

9. The burning apparatus of a solid fuel according to claim 8,
wherein the oxygen supply path passes through the burning furnace and is configured so that the gas containing oxygen is heated by the heat in the burning furnace.

10. The burning apparatus of a solid fuel according to claim 8,
wherein the oxygen supply path in the burning furnace is provided so as to pass through an upper part in the burning furnace.

11. The burning apparatus of a solid fuel according to claim 8,
wherein the ignition unit is provided more downstream of the exhaust path than a part where the oxygen supply path and the exhaust path are connected.

12. The burning apparatus of a solid fuel according to claim 8,
wherein a burner for burning the flue gas is provided in the exhaust path, and
wherein the burner is provided more downstream of the exhaust path than a part where the oxygen supply path and the exhaust path are connected, and additionally functions as the ignition unit.

13. The burning apparatus of a solid fuel according to claim 8,
wherein the oxygen supply path is connected to the gas feeding device,
wherein a through hole is provided to the oxygen supply path in the burning furnace, and
wherein a part of the gas containing oxygen in the oxygen supply path is supplied to the burning furnace through the through hole, and the gas containing oxygen that was not supplied to the burning furnace passes through the oxygen supply path and is mixed with the flue gas.

14. The burning apparatus of a solid fuel according to claim 8,
wherein the oxygen supply path passes through an upper part in the burning furnace, and
wherein a through hole of the oxygen supply path is provided to an upper part in the burning furnace.

15. The burning apparatus of a solid fuel according to claim 8,
wherein a tip of the oxygen supply path on a side of the exhaust path is of a nozzle shape.

16. The burning apparatus of a solid fuel according to claim 8,
wherein a catalytic part for promoting oxidation of components of the flue gas is provided in the exhaust path.

17. The burning apparatus of a solid fuel according to claim 16,
wherein the catalytic part is configured from honeycomb-type ceramics having oxides of alkaline earth metals as its primary component.

18. The burning apparatus of a solid fuel according to claim 16,
wherein the catalytic part is placed in an oxidizing atmosphere upon burning and the gas feeding device and the exhaust device are controlled so that a temperature of the catalytic part becomes 300°C or higher.

19. The burning apparatus of a solid fuel according to claim 1,
wherein a flow rate of the flue gas flowing in the exhaust path is set to a flow rate in which, upon burning, gas of a volume of a space from the gas feeding device to the exhaust device flows at a rate of 0.1 to 2 seconds.

20. A gas heating apparatus which heats a gas with a heat generated by the burning apparatus of a solid fuel according to claim 1.

21. A liquid heating apparatus which heats a liquid with a heat generated by the burning apparatus of a solid fuel according to claim 1.

22. A burning method of a solid fuel, comprising the steps of:

a gas feeding device feeding a gas containing oxygen to a burning furnace which burns the solid fuel;
an exhaust device exhausting a flue gas discharged from a discharge port of the burning furnace; and
a control unit simultaneously controlling the gas feeding device and the exhaust device and controlling a furnace pressure of the burning furnace to burn the solid fuel.

23. A power generation system, comprising:

an evaporator for evaporating a liquid heating medium into a gas by using a heat generated by the burning apparatus of a solid fuel according to claim 1; and
a turbine for converting energy of the gas generated in the evaporator into a rotary motion.

24. A cooling system, comprising:

an evaporator for evaporating a liquid heating medium into a gas by using a heat generated by the burning apparatus of a solid fuel according to claim 1;
a condenser for condensing the gas generated in the evaporator; and
an evaporator for evaporating a heating medium condensed in the condenser and absorbing thermal energy from a cooling medium.

Fig. 1

Fig. 2

Fig. 3

Fig. 4

Fig. 5

60

62

Fig. 6

(A)                              (B)

300

310

100

300

320

310

100

330

Fig. 7

Fig. 8

## INTERNATIONAL SEARCH REPORT

| International application No. |
| --- |
| PCT/JP2016/070196 |

| A. CLASSIFICATION OF SUBJECT MATTER |
| --- |
| *F23B60/00*(2006.01)i, *F23N5/00*(2006.01)i |

According to International Patent Classification (IPC) or to both national classification and IPC

| B. FIELDS SEARCHED |
| --- |
| Minimum documentation searched (classification system followed by classification symbols) |
| F23B60/00, F23N5/00 |

| Documentation searched other than minimum documentation to the extent that such documents are included in the fields searched |
| --- |
| Jitsuyo Shinan Koho          1922-1996   Jitsuyo Shinan Toroku Koho   1996-2016 |
| Kokai Jitsuyo Shinan Koho    1971-2016   Toroku Jitsuyo Shinan Koho   1994-2016 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2010-230305 A  (Kazuo MIYATANI), | 1,3,5-7, |
|   | 14 October 2010 (14.10.2010), | 19-24 |
| A | paragraphs [0025] to [0082]; fig. 1 to 8 | 2,4,8-18 |
|   | & WO 2010-101171 A1 | |
| | | |
| Y | JP 2004-191015 A  (Sunpot Co., Ltd.), | 1,3,5-7, |
|   | 08 July 2004 (08.07.2004), | 19-24 |
| A | paragraph [0025]; fig. 5 | 2,4,8-18 |
|   | (Family: none) | |

☒ Further documents are listed in the continuation of Box C.        ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 October 2016 (13.10.16) | 25 October 2016 (25.10.16) |

| Name and mailing address of the ISA/ | Authorized officer |
| --- | --- |
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

International application No.

PCT/JP2016/070196

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 140862/1981(Laid-open No. 46942/1983) (Chuno Yogyo Kabushiki Kaisha), 30 March 1983 (30.03.1983), page 4, line 20 (Family: none) | 6 |
| Y | JP 2009-523223 A  (Sunmachine GmbH), 18 June 2009 (18.06.2009), paragraph [0018]; fig. 1 & US 2009/0078176 A1 paragraph [0026]; fig. 1 & WO 2007/082640 A1      & DE 102006001299 A1 & CN 101432572 A | 7 |
| Y | JP 2014-81187 A  (Katsuhiko HIRAMATSU), 08 May 2014 (08.05.2014), paragraph [0007]; fig. 2 (Family: none) | 23 |
| Y | JP 2006-266610 A  (Chuden Plant Co., Ltd.), 05 October 2006 (05.10.2006), paragraphs [0018] to [0029]; fig. 1 (Family: none) | 24 |
| A | EP 2762777 A1  (Step TRUTNOV a.s.), 06 August 2014 (06.08.2014), (Family: none) | 1-24 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006183920 A
- JP 2004245563 A
- JP 2003343840 A
- JP 4734462 B